# EUROPÄISCHE PATENTSCHRIFT

(11) **EP 4 041 515 B1**
(45) Veröffentlichungstag und Bekanntmachung des Hinweises auf die Patenterteilung: **13.03.2024**
(21) Anmeldenummer: 20793249.2
(22) Anmeldetag: 09.10.2020
(51) Int. Cl.: B29B 9/06, B29C 48/00, B29C 48/05, B29C 48/345

(54) **ANORDNUNG ZUM GRANULIEREN VON EXTRUDIERTEM MATERIAL**
ASSEMBLY FOR GRANULATING EXTRUDED MATERIAL
ENSEMBLE POUR LA GRANULATION D'UN MATÉRIAU EXTRUDÉ

(30) Priorität: 11.10.2019 AT 508702019
(43) Veröffentlichungstag der Anmeldung: 17.08.2022
(73) Patentinhaber: EREMA Engineering Recycling Maschinen und Anlagen Gesellschaft m.b.H., 4052 Ansfelden (AT)
(72) Erfinder: AIGNER, Michael, 4060 Leonding (AT); WAGNER, Christian, 4212 Neumarkt im Mühlkreis (AT); HUBER, Roland, 4303 St. Pantaleon (AT); FEICHTINGER, Klaus, 4040 Linz (AT)
(74) Vertreter: Wildhack & Jellinek Patentanwälte
(86) Internationale Anmeldenummer: PCT/AT2020/060361
(87) Internationale Veröffentlichungsnummer: WO 2021/068020

(56) Entgegenhaltungen:
- EP-A2- 2 052 825
- EP-B1- 3 043 973
- WO-A1-2020/206476
- CN-B- 104 385 478
- CN-U- 203 141 679
- CN-U- 203 739 049
- CN-U- 203 888 063
- DE-B- 1 283 486
- KR-A- 20100 026 301

## Beschreibung

Die Erfindung betrifft eine Anordnung zum Granulieren von plastifiziertem, oder zumindest teilweise erweichtem bzw. zumindest teilweise aufgeschmolzenem, vorzugsweise extrudiertem, Material gemäß dem Oberbergriff des Patentanspruchs 1.

Derartige Anordnungen sind beispielsweise aus der EP 2 052 825 A2 bekannt. Bei dieser Anordnung ist die Auftrennung und Abfuhr der aus dem Extruder kommenden Granulatteilchen nicht optimal und es kommt auch zu Ablagerungen im Transportweg.

In der CN 203 141 679 U ist eine Anordnung zum Granulieren von Polymermaterial beschrieben, umfassend ein Gehäuse mit einer Gaszuleitung und einer gegenüberliegend am Gehäuse angeschlossenen, einen rechteckigen Querschnitt aufweisenden Gasableitung, sowie eine Granuliereinheit mit einem Abstreifer für das aus einer Lochplatte austretende Material. Die beiden Seitenwandflächen der Gasableitung sowie der Gaszuleitung, die senkrecht zu einer zur Ebene der Lochplatte senkrechten Ebene stehen, schließen miteinander jeweils einen sich vom Gehäuse weg öffnenden Winkel ein.

In der, als älteres Recht nachveröffentlichten, WO2020/206476 A1 (siehe auch die korrespondierende EP 3953126 B1; Stand der Technik unter Art. 54 (3) EPÜ) ist eine Anordnung zum Granulieren von Polymermaterial beschrieben, umfassend ein Gehäuse, eine Gaszuleitung, eine strömungsabwärts des Gehäuses befindliche Gasableitung, eine Granuliereinheit mit einer Lochplatte eines Extruders, und einen, das durch die Ausnehmungen der Lochplatte austretende Material zerkleinernden Abstreifer. Dabei ist vorgesehen, dass in einer parallel zur Ebene der Lochplatte verlaufenden Ebene, die beiden senkrecht zu dieser Ebene stehenden seitlichen Wandflächen der Gasableitung miteinander einen Winkel α2 einschließen, und die beiden senkrecht zu dieser Ebene stehenden seitlichen Wandflächen der Gaszuleitung einen Winkel α1 einschließen, wobei sich die beiden Winkel α1, α2 zum Gehäuse hin öffnen und wobei der Winkel α1 größer ist als der Winkel α2. Allerdings wird dort kein Übergangsgehäuse zwischen Granulatorgehäuse und Gasableitung offenbart, vielmehr schliesst die Gasableitung direkt und unmittelbar an das Gehäuse an.

Aufgabe der vorliegenden Erfindung ist es, die Granulierung von plastifizierten Materialien, d.h. von erweichten, teilerweichten, teilaufgeschmolzenen bis aufgeschmolzenen, thermoplastischen oder zumindest teilthermoplastischen Teilchen, vorzugsweise Polymerteilchen, mit einer einfach aufgebauten Anordnung zu verbessern.

Ziel ist es vor allem, die abgetrennten Teilchen möglichst rasch zu verfestigen und dabei sowohl eine gegenseitige Kollision der Teilchen als auch eine Kollision der Teilchen mit den Innenwandungen des Gehäuses bzw. der weiteren, die Teilchen abführenden Leitungen zu verhindern.

Diese Aufgabe wird durch die kennzeichnenden Merkmale des Patentanspruchs 1 gelöst. Erfindungsgemäß ist dabei vorgesehen, dass in einer parallel zur Ebene der Lochplatte und/oder der Vorderwand des Gehäuses verlaufenden Ebene E-E bzw. Schnittebene, die beiden senkrecht zu dieser Ebene stehenden seitlichen Wandflächen der Gasableitung miteinander einen Winkel α2 einschließen, und die beiden senkrecht zu dieser Ebene E-E stehenden seitlichen Wandflächen der Gaszuleitung einen Winkel α1 einschließen, wobei sich die beiden Winkel α1, α2 zum Gehäuse hin öffnen und wobei der Winkel α1 größer ist als der Winkel α2, und dass zwischen dem Gehäuse und der Gasableitung ein Übergangsgehäuse angeordnet bzw. eingebaut ist.

Es hat sich gezeigt, dass die gewünschten Effekte erreicht werden können, wenn die speziellen baulichen und geometrischen Vorgaben und Dimensionen für die erfindungsgemäße Anordnung eingehalten werden. Es wird gewährleistet, dass die Teilchen sicher und ohne gegenseitige Wechselwirkungen vom Gasstrom mitgenommen werden können. Speziell durch die Anordnung eines Übergangsgehäuse, das zwischen dem Gehäuse und der Gasableitung liegt, erfolgt der Abtransport der Teilchen aus dem Gehäuse optimal, insbesondere wird die Abtrennung der Teilchen unterstützt.

Der erfindungsgemäßen Anordnung ist eine Zufuhr- oder Plastifizierungseinheit vorgeordnet, die die zu granulierenden Materialien aufbereitet und bereitstellt. Die Zufuhr- oder Plastifizierungseinheit kann beliebig gestaltet sein. Die von dieser Einheit zur Lochplatte geförderten und aus der Lochplatte austretenden Materialstränge werden im praktischen Betrieb mit Abstreifern, z.B. Messern, Schabern od. dgl. zu Granulaten abgelängt. Als Abstreifer kann z.B. eine Anordnung mit einem oder mehreren rotierenden Messern eingesetzt werden, die auf einem Messerträger befestigt sind und, wie auch im erfindungsgemäßen Fall, von einem außerhalb des Gehäuses liegenden Antrieb, z.B. einem Elektromotor, angetrieben werden. Die Lochplatte und der von einem Motor angetriebene Abstreifer sind die Hauptbestandteile der Granuliereinheit.

Zum Abtrennen werden die Materialstränge in das speziell geformte Gehäuse gedrückt, wobei in dieses Gehäuse von einer Seite her, vorteilhafterweise von unten, ein Gasstrom eingeleitet wird. Dieser Gasstrom wird mittels eines Gebläses erzeugt. Der durch das Gehäuse geführte Gasstrom kann aus Luft, vorteilhafterweise getrockneter und/oder gekühlter und/oder temperierter Luft, also auch aus Edelgasen oder reaktiven Gasen oder Gasgemischen beliebiger Art bestehen.

An das Gehäuse, insbesondere an seiner der Gaszuleitung gegenüberliegenden Seite, ist ein Übergangsgehäuse und an dieses eine Gasableitung angeschlossen. Das Übergangsgehäuse stellt wie die Gasableitung ein eigenständiges Bauelement im Transportweg der Granulatteilchen dar. Sowohl das Übergangsgehäuse als auch die an das Übergangsgehäuse angeschlossene Gasableitung sind speziell geformt, um sowohl den vollständigen Abtransport der ausgebildeten Granulate rasch sicherzustellen, als auch die ausgebildeten Granulate vereinzelt und untereinander sowie den Innenwänden gegenüber kontaktfrei zu halten. Es erfolgt dabei von der einen Gehäuseseite eine Zufuhr des Gasstroms mit der Gaszuleitung in das Gehäuse in den Bereich der Lochplatte und ein Ableiten des Gasstroms bzw. ein Abtransport der Teilchen von dem Bereich der Lochplatte her aus einem gegenüberliegenden Bereich des Gehäuses über das Übergangsgehäuse in die Gasableitung. Es wird ein Kontakt der Granulate mit den Wandungen des Gehäuses bzw. den Gehäuseinnenwänden weitgehend unterbunden bzw. minimiert und eine Abbremsung und/oder Ablagerung der Granulatteilchen wird verhindert. Auch ein Ankleben der ausgeformten Granulatteilchen an den Innenwänden wird vermieden. Wesentlich ist es jedoch vor allem, dass erfindungsgemäß ein Verkleben der Granulatteilchen untereinander weitestgehend verhindert wird.

Die gebildeten Granulate werden mit einem durch die Anordnung geführten Medium, insbesondere mit einem Gas, transportiert. Dieses Gas kann jedes beliebige Gas oder Gasgemisch sein, insbesondere wird Luft eingesetzt. Der eingesetzte Gasstrom transportiert die Teilchen aus dem Gehäuse ab, wobei diese Materialteilchen bzw. Granulate bzw. Würstchen od. dgl. dabei mit Hilfe des Gasstroms abgekühlt und/oder verfestigt und/oder chemisch ausreagiert werden können, z.B. durch thermische Beeinflussung, Abkühlung bzw. durch eine durch das Gas initiierte bzw. induzierte Reaktion.

Die zu granulierenden Materialien, zB Polymere, können mit Fasern verstärkt und/oder auch teilvernetzt sein. Sie können auf Polyester, Polyolefinen oder auch Polyamiden basieren. Es ist prinzipiell möglich, alle zumindest teilweise plastifizierbaren, vorzugsweise extrudierbaren, Materialien, sofern sie entsprechend erweichbar bzw. aufschmelzbar und in Teilchen überführbar bzw. verfestigbar sind, mit der erfindungsgemäßen Anordnung vom Austrittsort bzw. Ort ihrer Ausbildung vor der Lochplatte abzutransportieren und während des Abtransports physikalisch oder chemisch zu behandeln bzw. reagieren zu lassen bzw. zu verfestigen. Die erfindungsgemäße Anordnung ist für alle Materialien einsetzbar, bei denen eine Ausformung von Strängen in ein Granulat durchführbar ist. Dazu gehören Teige, keramische Massen, Gummi, thermoplastische Polyurethane, Silikone, usw.

Grundsätzlich soll es gelingen, die Verfestigung der Materialien durch das eingesetzte Gas, insbesondere Luft, zu erreichen. Dabei können auch verdampfende Medien zu Hilfe genommen werden, wie z.B. Wasser, wenn bei Verdampfung von Wasser bzw. derartigen Medien eine Verfestigung der extrudierten und zu Teilchen zu formenden Materialien erreicht werden kann. Bei einer Verdampfung kann auch die dabei auftretende Abkühlung ausgenützt werden, insbesondere dann, wenn keine nennenswerte Kondensation und keine Flüssigphase dominant werden.

Unter dem Begriff Übergangsgehäuse ist vorliegend ein definiertes Bauelement zu verstehen. Das Übergangsgehäuse ist zwischen dem Gehäuse und der Gasableitung zusätzlich als weiterer Bauteil eingebaut. Das Übergangsgehäuse wird als eigenständiger Bauteil bzw. als Modul gefertigt und ist zwischen dem Gehäuse und der Gasableitung angeordnet. Auch andere wesentliche Einheiten der Vorrichtung, nämlich das Gehäuse, die Gaszuleitung und die Gasableitung, sind modulartig gefertigt und dann zusammengebaut. Das Übergangsgehäuse stellt dementsprechend eine modulartig aufgebaute Verbindungsleitung zwischen dem Gehäuse und der Gasableitung dar. Das Übergangsgehäuse ist, wie auch die Gasableitung, ein eigenständiges Bauelement im Transportweg der Granulatteilchen. Das Gas bzw. die Granulate gelangen somit vom Gehäuse nicht direkt in das Modul der Gasableitung, sondern müssen zuerst das Übergangsgehäuse passieren und vollständig durchlaufen. Erst danach treten sie in die Gasableitung ein. Dieses Verständnis des Übergangsgehäuses wird auch in Anspruch 27 widergegeben.

Die Merkmale der abhängigen Ansprüche stellen bevorzugte Weiterentwicklungen der Anordnung mit besonderen technischen Effekten dar:
Eine beträchtliche Verbesserung der Granulierung wird erreicht, wenn bei einer bevorzugten Ausführungsform der Erfindung vorgesehen ist, dass in der Ebene parallel zur Ebene der Lochplatte bzw. in der Schnittebene der gegenseitige Abstand der senkrecht zu dieser Ebene stehenden Seitenwände des Gehäuses in ihrem strömungsabwärts gelegenen Endbereich sowie der gegenseitige Abstand der daran anschließenden seitlichen, ebenfalls senkrecht zu dieser Ebene E-E stehenden Wandflächen des Übergangsgehäuses einen Wert b, insbesondere denselben Wert b, von 10 * d ≥ b ≥ 4 * d, vorzugsweise 8 * d ≥ b ≥ 5 * d, besitzen. Der Wert von d wird berechnet, indem der gemeinsame Flächenschwerpunkt von allen für einen Materialdurchtritt vorhandenen Ausnehmungen der Lochplatte ermittelt wird. Für jede Ausnehmung wird der Abstand ihres eigenen Flächenschwerpunkts von dem gemeinsamen Flächenschwerpunkt ermittelt und die für die vorhandenen Ausnehmungen ermittelten Abstandswerte werden arithmetisch gemittelt und der doppelte Wert des arithmetischen Mittels wird als Wert d festgelegt.

Der Wert b entspricht somit dem größten gegenseitigen Abstand der Seitenwände des Gehäuses sowie dem größten gegenseitigen Abstand der jeweils an diese Seitenwände anschließenden, seitlichen Wandflächen des Übergangsgehäuses an seinem strömungsaufwärts gelegenen Endbereich. Damit wird bei einfacher Fertigung ein wirbelfreier Übergang vom Gehäuse zum Übergangsgehäuse erreicht, wobei die Voraussetzungen für einen optimalen Teilchentransport gegeben sind.

Eine bevorzugte, strömungsgünstige und einer Ablagerung der Teilchen entgegenwirkende Ausführungsform sieht vor, dass die beiden Seitenwandflächen der Gasableitung, die senkrecht zu einer zur Ebene E-E bzw. senkrecht zu einer zur Ebene B-B der Lochplatte senkrechten Ebene stehen, miteinander einen Winkel β2 einschließen, und die ebenfalls senkrecht zu einer zur Ebene E-E bzw. senkrecht zu einer zur Lochplatte senkrechten Ebene B-B verlaufenden Seitenwandflächen der Gaszuleitung miteinander einen Winkel β1 einschließen, wobei sich die beiden Winkel β1, β2 vom Gehäuse weg gerichtet öffnen und wobei der Winkel β1 größer ist als der Winkel β2.

Es ist weiters vorteilhaft, wenn die zentrale Achse der Zufuhr- oder Plastifizierungseinheit, vorzugsweise eines Extruders, und/oder der gemeinsame Flächenschwerpunkt aller vorhandenen Ausnehmungen bzw. die durch den Flächenschwerpunkt verlaufende Mittellinie der Lochplatte mittig bezüglich der Seitenwände des Gehäuses liegen und/oder in einer senkrecht zur Ebene der Lochplatte stehenden und die Mittellinie des Gehäuses enthaltenden Symmetrieebene der Gaszuleitung und/oder der Gasableitung und/oder des Übergangsgehäuses und/oder Gehäuses liegen. Die Lage der Lochplatte in Bezug auf das Gehäuse bzw. das Übergangsgehäuse spielt eine wichtige Rolle für das Auftrennen der geformten Teilchen und das Transportverhalten der Anordnung.

Die Lochplatte mit den Ausnehmungen zum Durchtritt des zu granulierenden Materials bzw. eine durch den Flächenschwerpunkt der Ausnehmungen der Lochplatte verlaufende, senkrechte Mittellinie der Lochplatte kann im Zentrum des Gehäuses sitzen bzw. durch dieses verlaufen. Dieses Zentrum liegt mittig zwischen den Seitenwänden des Gehäuses bzw. auf einer in Strömungsrichtung durch das Gehäuse verlaufenden, zur Ebene der Lochplatte senkrecht stehenden Symmetrieebene, die die Längsmittellinie des Gehäuses enthält. Das Zentrum kann aber auch von den Schnittpunkten der jeweiligen Flächendiagonalen der Vorderwand und/oder der Rückwand des Gehäuses bestimmt werden.

Für eine Reihe von Anwendungsfällen, insbesondere für klebrige Materialien, hat es sich bewährt, wenn die zentrale Achse der Zufuhr- bzw. Plastifizierungseinheit, vorzugsweise des Extruders, und/oder der gemeinsame Flächenschwerpunkt aller vorhandenen Ausnehmungen bzw. die durch diesen verlaufende Mittellinie der Lochplatte bezüglich einer Mittellinie des Gehäuses und/oder einer senkrecht zur Ebene der Lochplatte stehenden und die Mittellinie des Gehäuses enthaltenden Symmetrieebene der Gaszuleitung und/oder der Gasableitung und/oder des Übergangsgehäuses und/oder bezüglich der Mitte zwischen den senkrecht zur Ebene E-E stehenden Seitenflächen des Gehäuses seitlich versetzt ist. Die seitliche Versetzung erfolgt um einen Wert c, mit c ≤ 2,5 * d, in den Bereich des Gehäuses, in dem die Drehrichtung des Abstreifers und die Richtung der Gasströmung in die gleiche Richtung verlaufen. Die Lochplatte bzw. deren Mittelpunkt ist damit in Relation zum Mittelpunkt des Gehäuses bzw. zur Mittellinie des Gehäuses versetzt. Der Versatz erfolgt somit derart, dass - betrachtet von der Stirnfläche des Gehäuses gegen den Austritt des Materials aus der Lochplatte - ein größerer Wandabstand in jenem Bereich entsteht, in dem sich die rotierenden Werkzeuge bzw. Messer des Abstreifers gegen die Hauptluftströmung bewegen. Abgetrennte Partikel bekommen beim Abtrennen einen Impuls gegen die Förderrichtung des Luftstroms und werden aber langsamer, da sie sich gegen die Förderrichtung der Luft bewegen. Die Gefahr eines Auftreffens derartiger Partikel auf die Gehäusewand wird durch diese Maßnahme verringert.

Unter besonders klebrigen Materialien werden Materialien verstanden, bei denen nach dem Abtrennen der Granulatteilchen die Abkühlzeit im Gasstrom, so wie sie in der Praxis zum Einsatz kommt, nicht ausreicht, um die Klebeneigung dieser Granulatteilchen deutlich zu reduzieren. Damit wird die Gefahr, dass kollidierende Granulatteilchen aneinander haften bleiben oder sich an der Gehäuseinnenwand aufbauen, beträchtlich erhöht. Deshalb wird in derartigen Fällen die Lochplatte im Gehäuse nicht zentrisch angeordnet, sondern die Lochplatte wird relativ zur Längsmittellinie bzw. Längsmittelsymmetrieachse des Gehäuses versetzt, womit ein größerer Wandabstand in jenem Bereich ausgebildet wird, bei dem sich die rotierenden Messer des Abstreifers gegen die Richtung der Gasströmung bewegen.

Insbesondere für klebrige Materialien kann es des Weiteren von Vorteil sein, wenn die zentrale Achse der Zufuhr- bzw. Plastifizierungseinheit, vorzugsweise eines Extruders, und/oder der gemeinsame Flächenschwerpunkt aller vorhandenen Ausnehmungen bzw. eine durch diesen verlaufende Mittellinie der Lochplatte, gegenüber der Stelle bzw. Querschnittsfläche des Gehäuses, an der - in Strömungsrichtung gesehen - die Seitenwände des sich verbreiternden Gehäuses den gegenseitigen Abstand b angenommen haben, strömungsaufwärts in einem Abstand a angeordnet ist, wobei a ≤ 1,1 * d ist. In der Praxis ist vorgesehen, dass das Gehäuse fix steht und die Achse der Zufuhr- bzw. Plastifizierungseinheit relativ zum Gehäuse verschoben bzw. versetzt wird. In der Praxis wird die Lochplatte in Relation zum Gehäuse in Strömungsrichtung versetzt.

Es hat sich als vorteilhaft erwiesen, wenn in dem Übergangsbereich bzw. am Übergang bzw. an der Übergangsfläche vom Gehäuse zum Übergangsgehäuse das Gehäuse und das Übergangsgehäuse die gleiche rechteckförmige Querschnittsfläche besitzen, wobei die Länge der längeren Rechteckseite den Wert b besitzt. Damit ergibt sich ein wirbelfreier Übergang vom Gehäuse in das Übergangsgehäuse. In diesem Zusammenhang ist es auch von Vorteil, wenn die Querschnittsfläche des Gehäuses im Übergangsbereich zum Übergangsgehäuse bzw. wenn die Querschnittsfläche (16) nur 5 bis 20 %, vorzugsweise 10 bis 15 %, größer ist als die Querschnittsfläche der Gasableitung in ihrem gehäusefernen Endbereich.

Ferner ist es vorteilhaft, die Querschnittsfläche des Gehäuses auf der Höhe der Lochplatte um 25 bis 35 % größer als die Querschnittsfläche der Gaszuleitung in ihrem strömungsaufwärtigen Ende bzw. ihrem Anschluss an das Gebläse zu gestalten. Damit ergibt sich ein weitgehend wirbelfreier Transport über die gesamte Anordnung mit einer Düsenwirkung im Gehäuse. Von Vorteil ist es ferner, wenn die Querschnittsfläche des Gehäuses von der Höhe der Lochplatte bis zum Übergangsbereich zum Übergangsgehäuse bzw. bis zur Querschnittsfläche (16) zur Ausbildung eines Diffusors um 10 bis 20 % zunimmt.

Für das an das Gehäuse anschießende Übergangsgehäuse ist es von Vorteil, wenn die Länge des Übergangsgehäuses in Strömungsrichtung 35 bis 100 %, vorzugsweise 50 bis 90 %, der Länge des Gehäuses beträgt.

Die Querschnittsfläche des Übergangsgehäuses nimmt zweckmäßigerweise von seinem gehäuseseitigen Endbereich bis zu seinem strömungsabwärts gelegenen Endbereich hin bzw. bis zum Anfangsbereich der Gasableitung um 20 bis 45 % ab.

Um den gegenseitigen Kontakt der Granulatteilchen zu verringern, ist es von Vorteil, wenn in einer Ebene E-E parallel zur Lochplatte die gegenüberliegenden Seitenwandflächen des Gehäuses zumindest über einen Teilbereich ihrer Längserstreckung einen von der Gaszuleitung zum Übergangsgehäuse hin divergierenden, vom Inneren des Gehäuses aus gesehen konvex gekrümmten, insbesondere kontinuierlichen, Verlauf besitzen. Die Übergänge zwischen den einzelnen Abschnitten werden vorteilhafterweise in Form von runden, bogenförmigen Elementen ausgebildet, können jedoch auch in segmentierter Bauweise realisiert werden. Bei einer Segmentierung können aber auch bei kleinen Winkeln bei den Segmentübergängen Probleme im Hinblick auf die Anlagerung von Staub und Material in den Ecken und Kanten eintreten. Des Weiteren nimmt die Qualität der Luftführung in derartigen Bereichen ab, da dort unerwünschte Verwirbelungen auftreten können.

Bevorzugt ist es, wenn die Vorderwand und die Rückwand des Gehäuses und/oder die Vorderwand und die Rückwand des Übergangsgehäuses parallel zueinander und/oder parallel zur Ebene der Lochplatte ausgerichtet sind. Die parallelen Wandabschnitte, die das Gas im Gehäuse durchströmt, verbessern den Abtransport der abgetrennten Teilchen in Richtung Übergangsgehäuse bzw. die Gasableitung bzw. die Düsenwirkung.

Ein einfacher Aufbau der erfindungsgemäßen Anwendung ergibt sich, wenn der Abstreifer eine Antriebswelle besitzt, die im Gehäuse von der Rückwand des Gehäuses zu der im Bereich der Vorderwand des Gehäuses gelegenen und den Endbereich der Zufuhr- oder Plastifizierungseinheit, vorzugsweise des Extruders, darstellenden Lochplatte verläuft. Ein strömungsgünstiger Anschluss an Einheiten zur Weiterverarbeitung bzw. -behandlung der Granulatteilchen ergibt sich, wenn an die Gasableitung ein Übergangsteil angeschlossen ist, der den rechteckförmigen Querschnitt der Gasableitung in einen Querschnitt mit rundem oder gekrümmtem Umfang überleitet. Der Übergangsteil kann sich strömungsabwärts verjüngende Wandabschnitte aufweisen, die insbesondere an die seitlichen Wandflächen bzw. Seitenwandflächen der Gasableitung unter dem gleichen Winkel α2 bzw. dem gleichen Winkel β2 wie diese geneigt anschließen bzw. diese, insbesondere in Form von Dreiecken, verlängern.

Ein bezüglich des Teilchentransports und einer Verhinderung ihres Zusammenklebens vorteilhafter Aufbau der Anordnungen ergibt sich, wenn der Scheitel der Winkel α1, α2 und/oder β1, β2 auf der Mittellinie bzw. einer, insbesondere parallel zu einer Mittellinie der Lochplatte bzw. zentralen Achse der Zufuhr- oder Plastifizierungseinheit verlaufenden oder diese enthaltenden, Längssymmetrieebene durch die Gaszuleitung und/oder das Gehäuse und/oder das Übergangsgehäuse und/oder die Gasableitung liegt.

Als günstig für den Teilchentransport hat es sich erwiesen, wenn der Winkel α2 das 0,3-fache bis 0,9-fache, vorzugsweise das 0,5-fache bis 0,8-fache, des Winkels α1 beträgt. Ein Zusammenkleben der Teilchen wird verringert, wenn der Winkel α1 < 90° ist und vorzugsweise im Bereich von 10° bis 80° liegt und insbesondere ein spitzer Winkel von 15° bis 45° ist, und/oder wenn der Winkel α2 < 90° ist und insbesondere ein spitzer Winkel, vorzugsweise im Bereich von 3° bis 35°, insbesondere von 6° bis 30°, ist.

Günstig für den Teilchentransport ist es ferner, wenn der Winkel β2 das 0,1-fache bis 0,45-fache, vorzugsweise das 0,15-fache bis 0,35-fache, des Winkels β1 beträgt.

Um das Zusammenkleben der Teilchen weiter zu verringern, ist es vorteilhaft, wenn der Winkel β1 < 90° ist und insbesondere ein spitzer Winkel, vorzugsweise im Bereich von 10° bis 60°, insbesondere von 15° bis 50°, ist, und/oder wenn der Winkel β2 < 90° ist und insbesondere ein spitzer Winkel, vorzugsweise im Bereich von 2° bis 30°, insbesondere von 4° bis 15°, ist.

Platzsparend und für die industrielle Anwendung von Vorteil ist es, wenn die Gaszuleitung, das Gehäuse, das Übergangsgehäuse und die Gasableitung vertikal übereinander angeordnet bzw. zusammengebaut sind. Prinzipiell ist auch eine horizontale oder geneigte Anordnung von Gaszuleitungen und/oder Gehäuse, Übergangsgehäuse und Gasableitung möglich.

Zweckmäßig ist es, wenn die senkrecht zur Ebene E-E der Lochplatte stehenden Seitenwandflächen des Übergangsgehäuses - von innen gesehen - zumindest teilweise konvex gekrümmt sind und strömungsabwärts zur Gasableitung hin konvergierend verlaufen, wobei gegebenenfalls die Seitenwandflächen des Übergangsgehäuses senkrecht zur Ebene E-E der Lochplatte verlaufen.

Baulich einfach und für eine Wartung günstig ist es, wenn die Endfläche bzw. Endumrandung des Übergangsgehäuses und die Anfangsfläche bzw. Anfangsumrandung der Gasableitung gleiche Neigung zur Längs- bzw. Mittellinie bzw. zur Ebene E-E der Lochplatte besitzen und die Endfläche des Übergangsgehäuses unter einem Winkel γ = 40 bis 90°, vorzugsweise 50 bis 80°, zur Mittellinie bzw. Ebene der Lochplatte geneigt verlaufen, wobei sich der Winkel γ zur Zufuhr- oder Plastifizierungseinheit hin öffnet.

Dieser Aufbau ist vor allem günstig, wenn erfindungsgemäß vorgesehen wird, dass die Gaszuleitung, das Gehäuse und das Übergangsgehäuse als eine Einheit ausgebildet bzw. zusammengebaut sind, und die Zufuhr- oder Plastifizierungseinheit und die von einem Träger abgestützte Gasableitung gemeinsam als weitere Einheit ausgebildet sind, wobei zumindest eine der beiden Einheiten relativ zur anderen Einheit verschwenkbar gelagert ist. Auf diese Weise ist ein Zugang zum Inneren des Gehäuses und des Übergangsgehäuses gut möglich.

Für den sicheren, raschen und möglichst kollisions- und ablagerungsfreien Transport der Teilchen sind die Winkel α1, α2 und in vorteilhafter Ausgestaltung auch β1, β2 zwischen den jeweiligen Wandflächen der Gaszuleitung und der Gasableitung sowie die Geometrie des Gehäuses und des Übergangsgehäuses von Bedeutung. Auch die Werte b und d sowie die Ausdehnung bzw. Aufweitung des Gehäuses strömungsabwärts von der Lochplatte haben Einfluss auf eine ablagerungsfreie Teilchenagglomeration.

Die Erfindung wird nachfolgend beispielhaft in bevorzugten Ausführungsbeispielen dargestellt.
Fig. 1 zeigt eine schematische, perspektivische Ansicht der erfindungsgemäßen Anordnung, wobei im rechten Teil der Figur die mit der Zufuhr- oder Plastifizierungseinheit, vorzugsweise einem Extruder, verbundene Einheit der Anordnung dargestellt ist, an dem die links dargestellte weitere Einheit der erfindungsgemäßen Anordnung verschwenkbar gelagert ist.
Fig. 2 zeigt eine Schnittansicht E-E der Anordnung gemäß Fig. 3, wobei die Blickrichtung in Richtung des an die Anordnung angeschlossenen Extruders verläuft.
Fig. 3 zeigt einen Schnitt B-B gemäß Fig. 2.
Fig. 4 und 5 zeigen unterschiedliche Ausführungsformen betreffend die Lage der Anordnung bzw. des Gehäuses im Bezug auf die Extruderwelle bzw. eine Lochplatte des Extruders.
Fig. 6 zeigt ein Schaubild.
Fig. 7 zeigt eine Skizze zur Bestimmung des Werts b.

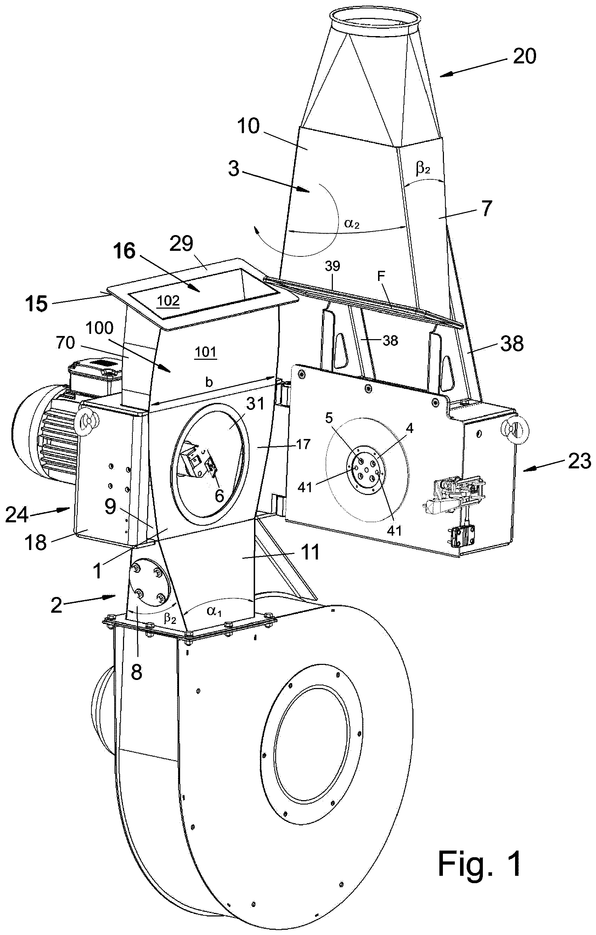

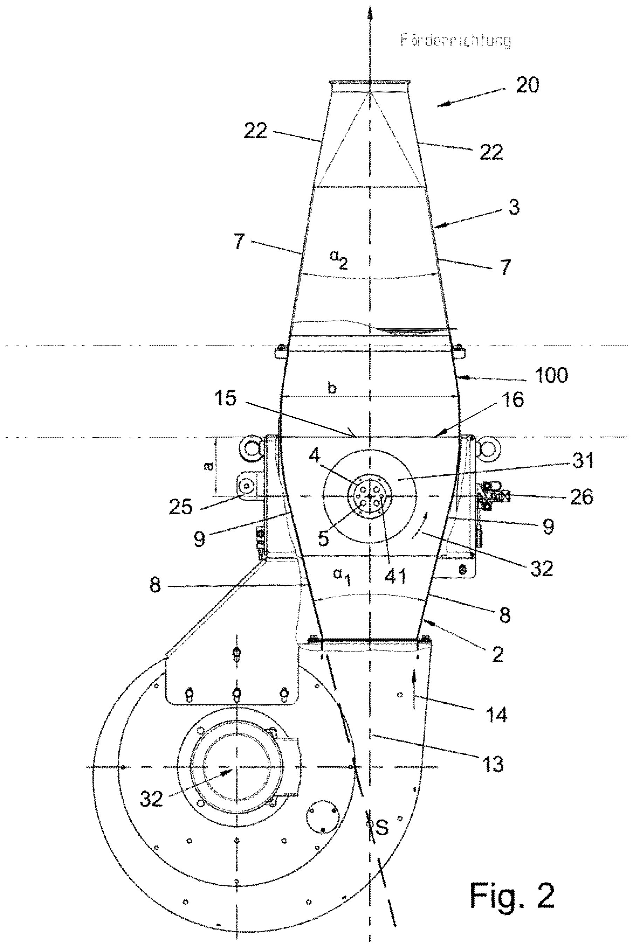

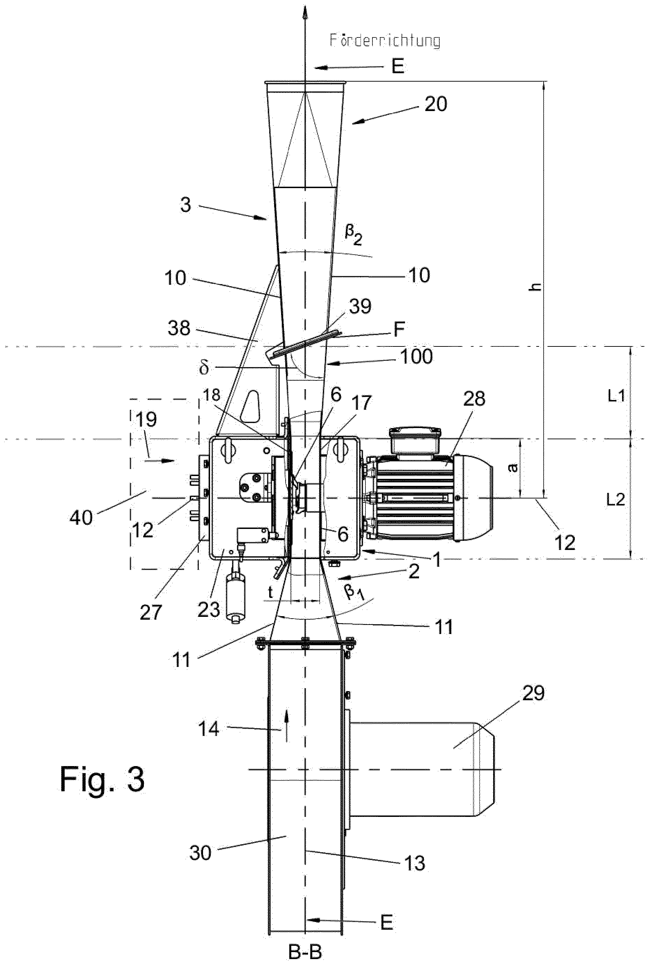

Die erfindungsgemäße Anordnung wird einer beliebigen Zufuhr- oder Plastifizierungseinheit 40, vorzugsweise einem Extruder, nachgeordnet bzw. an diese(n) angeschlossen. Die Einheit 40 ist in Fig. 3 nur angedeutet und besitzt einen Endbereich bzw. Endteil 27, der von einer Lochplatte 4 abgeschlossen ist. Der Endteil 27 ist, wie aus Fig. 1 und 2 ersichtlich, von einem kastenförmigen Tragteil 23 eines Gehäuses 1 aufgenommen bzw. an diesen angeschlossen. Die Lochplatte 4 für den Materialaustritt mündet in das Gehäuse 1. Die Förderrichtung der Einheit 40 ist in Fig. 3 schematisch mit einem Pfeil 19 dargestellt. Eine derartige Einheit 40 kann auch von einer plastifiziertes und/oder geschmolzenes Material fördernden Druckleitung gebildet sein, die von der Lochplatte 4 endseitig abgeschlossen ist.

Wie Fig. 1 zeigt, liegen zwischen einer Gaszuleitung 2 und einer Gasableitung 3 ein Gehäuse 1 und ein Übergangsgehäuse 100. Die Vorderwand 17 und Rückwand 18 des Gehäuses 1 verlaufen parallel zueinander. In aneinander anliegender bzw. eingeschwenkter Stellung der Tragteile 23, 24 mündet die Lochplatte 4 in das Gehäuse 1 durch eine Ausnehmung 31 in der Vorderwand 17. Ferner ragt die Antriebswelle eines Abstreifers 6 in das Gehäuse 1. Die Antriebswelle des Abstreifers 6 verläuft durch die Rückwand 18 und ist von einem Motor 28 angetrieben.

Wie in Fig. 1 dargestellt, ist an dem Tragteil 23 mittels eines beliebig gestaltbaren Schwenklagers 25 der Tragteil 24 schwenkbar gelagert, der seinerseits den Motor 28 und den vom Motor 28 über eine Antriebswelle angetriebenen Abstreifer 6 trägt. Der Abstreifer 6 kommt bei einem auf den Tragteil 23 aufgeschwenkten Tragteil 24 an der Lochplatte 4 zum Anliegen und kann dort das durch die Lochplatte 4 austretende Material abschaben. Auf diese Weise können im Gehäuse 1 bei gleichzeitigem Abtransport mit einem durch das Gehäuse 1 geführten Gasstrom Granulatteilchen ausgebildet werden.

Das Schwenklager 25 für die Tragteile 23, 24 ist vorgesehen, um Wartungsarbeiten innerhalb des Gehäuses 1 einfach zu ermöglichen bzw. um Zutritt zum Abstreifer 6 und zur Lochplatte 4 zu erhalten. Prinzipiell kann auch der weitere Tragteil 24 feststehen und der Tragteil 23 auf diesem gelagert sein.

Der Tragteil 23 trägt über Träger 38 in seinem oberen Bereich die Gasableitung 3 in Form eines sich verjüngenden Rohrs bzw. Kanals mit vier in Strömungsrichtung verlaufenden Kanten bzw. einer rechteckförmigen Querschnittfläche, an die ein Übergangsteil 20 mit Wandabschnitten 21, 22 anschließt, der mit einem gerundeten Querschnitt endet. Die Wandabschnitte 21 und 22 besitzen jeweils dieselbe Neigung wie die Seitenwandflächen 7 bzw. 10 der Gasableitung 3.

In dem der Gaszuleitung 2 gegenüberstehenden Endbereich des Gehäuses 1 ist ein Übergangsgehäuse 100 angebaut bzw. zwischen Gehäuse 1 und Gasableitung 2 eingesetzt, das einen Übergang vom Gehäuse 1 zur Gasableitung 3 darstellt. Bei eingeschwenktem Tragteil 24 liegt das Übergangsgehäuse 100 mit seiner oberen bzw. gehäusefernen Endumrandung 29 bzw. Endfläche bzw. seinem oberen Öffnungsquerschnitt 29 an einer an diese Endumrandung bzw. diesen Öffnungsquerschnitt 29 angepassten Anfangsumrandung 39 bzw. Anfangsfläche bzw. Querschnittsumrandung bzw. Querschnittsfläche 39 der Gasableitung 3 an. Somit kann mit einem Gebläse 30 über die Gaszuleitung 2 von unten in das Gehäuse 1 eingeströmtes Gas über das Gehäuse 1 und das Übergangsgehäuse 100 in die Gasableitung 3 geleitet werden, wobei das Gas an der Lochplatte 4 und dem Abstreifer 6 vorbeiströmt. Die Lochplatte 4 mündet in das Gehäuse 1 durch eine Öffnung 31 in der Vorderwand 17 des Gehäuses 1. Prinzipiell kann - wie dargestellt - die Lochplatte 4 mit der Vorderwand 17 das Gehäuse abschließen oder in das Gehäuse 1 ragen. Auf diese Weise können die der Lochplatte 4 austretenden Materialstränge vom Abstreifer 6 abgetrennt und direkt vom Gasstrom mitgenommen werden.

An das Gebläse 30 ist die zum Gehäuse 1 führende Gaszuleitung 2 angeschlossen. Wie aus Fig. 2 ersichtlich, sind die seitlichen Wandflächen 8 der Gaszuleitung 2, die senkrecht zur Ebene der Lochplatte 4 bzw. einer Schnittebene E-E bzw. zur Vorderwand 17 und Rückwand 18 des Gehäuses 1 verlaufen, unter einem Winkel α1 zueinander geneigt, wobei der Scheitel S dieses Winkels α1 auf der Mittellinie zwischen diesen beiden Wandflächen 8 bzw. auf der Mittellinie 13 des Gehäuses 1 bzw. einer Längssymmetrieachse des Gehäuses 1 liegt. In der dargestellten Ausführungsform beträgt der Winkel α1 = 27° und sein Scheitel S liegt unter der Achse des Rotors.

An die beiden Wandflächen 8 der Gaszuleitung 2 schließen die Seitenwände 9 des Gehäuses 1 an, die strömungsabwärts divergieren und von innen gesehen über einen strömungsabwärts gehenden Teilbereich, leicht konvex gekrümmt sind. Im strömungsabwärts gelegenen Endbereich des Gehäuses 1 zeigt das Gehäuse 1 zwischen den Seitenwänden 9 eine lichte Weite bzw. einen Abstand b. An diesem Endbereich des Gehäuses 1 ist das Übergangsgehäuse 100 in Form eines Moduls angebaut.

Die seitliche Wandflächen 7 der Gasableitung 2 schließen miteinander einen Winkel α2 ein, dessen Scheitel strömungsabwärts des Gehäuses 1 bzw. der Gasableitung 3 liegt. Der Winkel α1 ist größer als der Winkel α2. Der Winkel α2 beträgt im dargestellten Fall 19°.

Prinzipiell stellt das Übergangsgehäuse 100 eine modulartig aufgebaute Verbindungsleitung zwischen dem Gehäuse 1 und der Gasableitung 3 dar. Die Gaseintrittsfläche des Übergangsgehäuses 100 entspricht vom Querschnitt her der Gasaustrittsfläche des Gehäuses 1. Die Querschnittsfläche des strömungsabwärts gelegenen Endbereichs des Übergangsgehäuses 100 entspricht der Querschnittsfläche F der angeschlossenen Gasableitung 3. Prinzipiell können die Wandflächen des Übergangsgehäuses 100 eben oder zumindest teilweise gekrümmt verlaufen. Es ist prinzipiell auch möglich, dass die einander gegenüberliegenden oder alle Wandflächen des Übergangsgehäuses 100 zumindest abschnittsweise dieselbe Neigung wie die jeweils anschließenden Wandflächen der Gasableitung 3 besitzen bzw. die entsprechenden Kanten der Wandflächen des Übergangsgehäuses 100 und der Gasableitung 3 schließen dieselben Winkel untereinander ein. Vorteilhafterweise verlaufen die Wandflächen des Übergangsgehäuses 100 gekrümmt vom Gehäuse 1 zur Gasableitung 3 oder sind mit einer Mehrzahl von Wandteil-Segmenten zur Ausbildung einer gekrümmten Rohrleitung gebildet.

Das Übergangsgehäuse 100 ist als eigenständiger Bauteil bzw. als Modul gefertigt und zwischen dem Gehäuse 1 und der Gasableitung 3 angeordnet. Auch die anderen Einheiten der Vorrichtung, wie zB Gehäuse 1, Gaszuleitung 2 und Gasableitung 3, sind modulartig gefertigt und dann zusammengebaut. Das Übergangsgehäuse 100 stellt also eine modulartig aufgebaute Verbindungsleitung zwischen dem Gehäuse 1 und der Gasableitung 3 dar. Das Übergangsgehäuse 100 ist somit, wie die Gasableitung 3, ein eigenständiges Bauelement im Transportweg der Granulatteilchen.

Wie Fig. 1 zeigt, liegen das Gehäuse 1 und das Übergangsgehäuse 100 zwischen der Gaszuleitung 2 und der Gasableitung 3. Bei eingeschwenktem Tragteil 24 liegt das Übergangsgehäuse 100 mit seiner oberen Endumrandung 29 an der an diesen Öffnungsquerschnitt angepassten Anfangsumrandung 39 der Gasableitung 3 an. Das Gas bzw. die Granulate gelangen somit vom Gehäuse 1 nicht direkt in das Modul der Gasableitung 3, sondern müssen zuerst das Übergangsgehäuse 100 passieren und vollständig durchlaufen. Erst danach treten sie in die Gasableitung 3 ein.

Aus Fig. 3 ist der Winkel β1 ersichtlich, der bei der zum Gebläse 30 führenden Gaszuleitung 2 von den beiden senkrecht zu einer zur Schnittebene E-E bzw. einer zur Ebene der Lochplatte 4 senkrecht verlaufenden Ebene stehenden Seitenwandflächen 11 eingeschlossen wird. Der Winkel β1 ist größer als der Winkel β2, der von den beiden ebenfalls zu dieser Ebene E-E senkrecht stehenden Seitenwandflächen 10 der Gasableitung 3 ausgebildet wird. Der Scheitel des Winkels β1 liegt strömungsabwärts der Gaszuleitung 2 im Gehäuse 1. Der Scheitel des Winkels β2 liegt strömungsaufwärts der Gasableitung 3, sowie strömungsaufwärts des Gehäuses 1 in der Gaszuleitung 2. Der Winkel β2 beträgt im dargestellten Fall 7,5°, der Winkel β1 beträgt 27°.

Im Betrieb wird das Gebläse 30 mit dem Gebläsemotor 28 angetrieben und fördert einen Gasstrom über die Gaszuleitung 2 in das Gehäuse 1, welcher Gasstrom die mit dem Abstreifer 6 an der Lochplatte 4 abgetrennten Granulatteilchen aus dem Gehäuse 1 abführt und über das Übergangsgehäuse 100 in die Gasableitung 3 mitnimmt. Diese Teilchen in Form von Granulaten, Würstchen bzw. unregelmäßig geformten Körpern können im bzw. mit Hilfe des Gasstroms verfestigt werden. Diese Verfestigung kann durch eine thermische Beeinflussung, z.B. Abkühl- oder Trocknungswirkung des Gasstroms, oder aber auch durch den Gasstrom selbst induzierte chemische Reaktionen erfolgen.

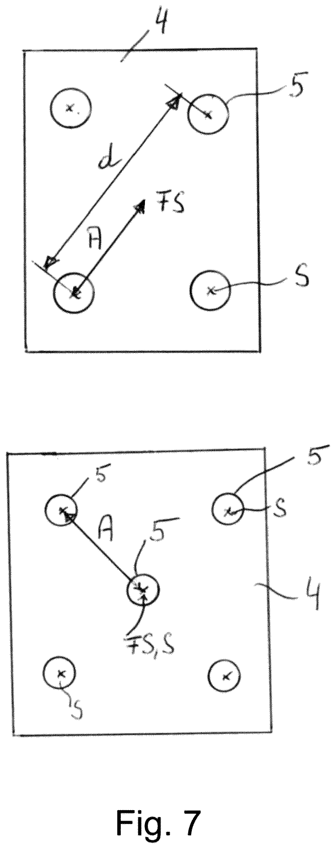

Der Querschnitt bzw. die Querschnittsfläche des Gehäuses 1 in seinem strömungsabwärtigen Endbereich zeigt gemäß Fig. 1 eine Seitenkante bzw. einen Abstand b zwischen den seitlichen Wandflächen 9, der im Verhältnis zu einem für die Lochplatte 4 charakteristischen Wert d steht. Dieser Wert d wird, wie anhand von Fig. 7 näher erläutert wird, durch Lage, Form und Anzahl der Ausnehmungen 5, die den Querschnitt des zu granulierenden Materials bestimmen, bestimmt, da in der Praxis für unterschiedliche Materialien eingesetzte Lochplatten 4 unregelmäßig verteilte und/oder ungleich große und/oder ungleiche Formen aufweisende und/oder eine unterschiedliche Anzahl von Ausnehmungen 5 besitzen. Zur Feststellung des Werts d wird der gemeinsame Flächenschwerpunkt FS für alle vorhandenen Ausnehmungen 5 ermittelt. Ferner wird für jede Ausnehmung 5 der Abstand A des Flächenschwerpunkts S der jeweiligen Ausnehmung 5 von dem gemeinsamen Flächenschwerpunkt FS ermittelt. Die für alle vorhandenen Ausnehmungen 5 ermittelten Werte für den Abstand A werden arithmetisch gemittelt. Der doppelte Wert des arithmetischen Mittels entspricht sodann dem Wert d.

Wie in Fig. 7 dargestellt, sind in einer Lochplatte 4 vier Ausnehmungen 5 jeweils an den Eckpunkten eines gedachten Rechtecks angeordnet. Jede dieser Ausnehmungen besitzt als Flächenschwerpunkt S ihren Mittelpunkt, da die Ausnehmungen kreisförmig ausgebildet sind. Der gemeinsame Flächenschwerpunkt der vier Ausnehmungen 5 liegt im Zentrum dieser vier Ausnehmungen 5 und ist mit FS bezeichnet. Der Abstand zwischen diesem gemeinsamen Flächenschwerpunkt FS und den einzelnen Ausnehmungen 5 ist mit A bezeichnet. Der Abstand A ist für die vier Ausnehmungen 5 jeweils gleich groß, sodass die Summe, die für das arithmetische Mittel zu bilden ist, 4 * A beträgt. Nach Ermittlung des arithmetischen Mittels, das den Wert A besitzt, ergibt sich somit als von der Lochplatte 4 abhängiger Wert d = 2 * A. Diese Art der Ermittlung ist ohne Weiteres auch für elliptischen Querschnitt aufweisende Ausnehmungen 5 oder für kreisförmig angeordnete Anordnungen 5 anwendbar. Bei unregelmäßig ausgebildeten oder unterschiedliche Formen aufweisenden Ausnehmungen 5 ist für jede Ausnehmung ihr eigener Flächenschwerpunkt S zu ermitteln und aus der Summe der einzelnen Flächenschwerpunkte S kann sodann der gemeinsame Flächenschwerpunkt FS ermittelt werden.

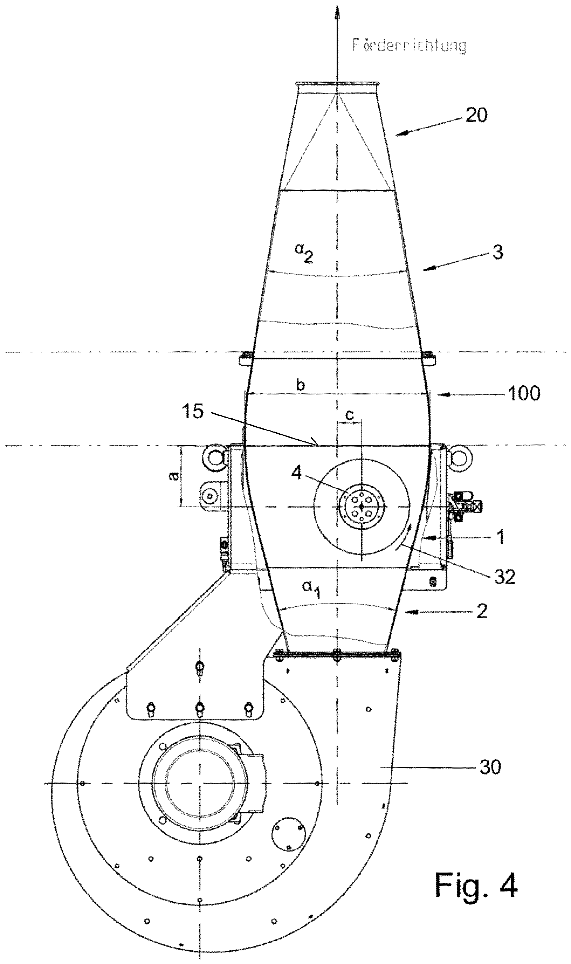

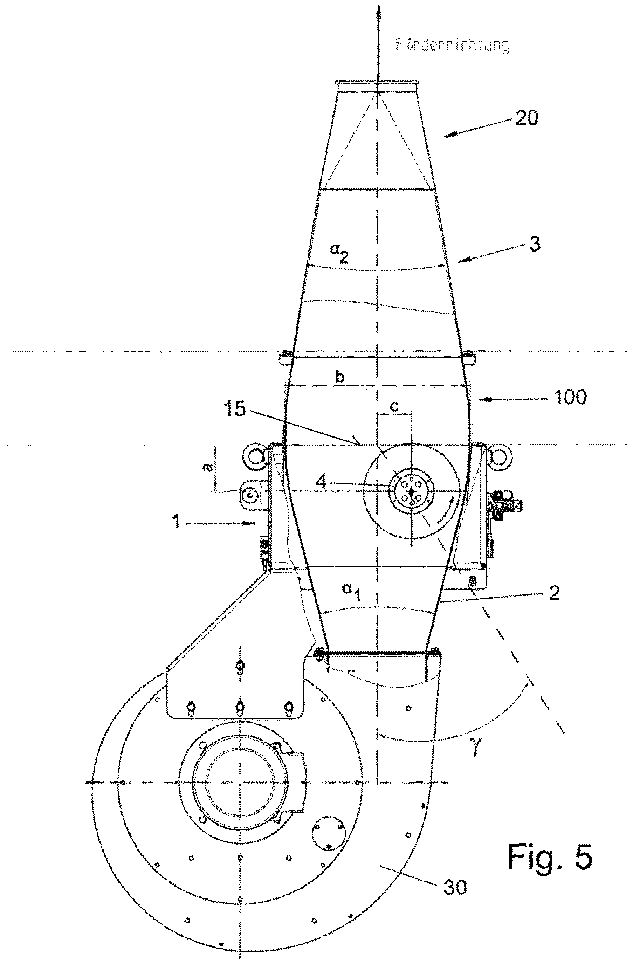

In Fig. 4 und 5 sind Lochplatten 4 dargestellt, deren Ausnehmungen 5 an den Ecken eines Quadrats angeordnet sind, wobei eine weitere Ausnehmung 5 im diagonalen Schnittpunkt dieses Quadrats liegt. Der Wert d ergibt sich somit als die Länge der Diagonale dieses Quadrats, an dessen Eckpunkten die Mittelpunkte bzw. Flächenschwerpunkte der kreisförmigen Ausnehmungen 5 gelegen sind. In Fig. 7 unten ist diese Anordnung von Ausnehmungen 5 deutlicher dargestellt. Diese Ermittlung von d gilt auch für die Lochplatte 4 gemäß Fig. 1, die fünf Ausnehmungen 5 aufweist, und mit zwei Befestigungsausnehmungen 41 versehen ist.

Bei der in Fig. 1 und 2 dargestellten Ausführungsform schneiden die Achse des Endteils der Zufuhr- bzw. Plastifizierungseinheit 27 bzw. die Extruderachse sowie die durch den gemeinsamen Flächenschwerpunkt FS verlaufende und senkrecht zur Ebene der Lochplatte 4 stehende Mittellinie 12 der Lochplatte 4 die in Längsrichtung verlaufende Mittellinie 13 des Gehäuses 1. Für klebrige Materialien kann sich jedoch als vorteilhaft erweisen, wenn ein außermittiger Versatz der Lochplatte 4 bzw. ihrer Mittellinie 12 relativ bzw. seitlich zu dieser Mittellinie 13 erfolgt. Besonders bei stark klebrigen Materialien besteht die Gefahr, dass abgetrennte Teilchen untereinander kollidieren bzw. mit der Innenwandfläche des Gehäuses 1 in Kontakt kommen und aneinander haften bleiben oder sich am Gehäuse 1 aufbauen und den Durchgang verlegen.

Es hat sich deshalb als vorteilhaft erwiesen, wenn - wie in Fig. 4 und 5 dargestellt - die Mittellinie 12 der Lochplatte 4 bzw. die Achse der Zufuhr- oder Plastifizierungseinheit 27 bzw. der Flächenschwerpunkt FS der Lochplatte 4 um einen Betrag c seitlich zur Mittellinie 13 des Gehäuses 1 versetzt ist. Dieser Versatz erfolgt horizontal bzw. quer zur Strömungsrichtung in einer Ebene parallel zur Lochplatte 4. Es ist allerdings materialabhängig auch möglich, dass dieser Versatz, gegebenenfalls zusätzlich zu einem quer zur Strömungsrichtung erfolgenden Versatz, auch vertikal bzw. in oder gegen die Strömungsrichtung erfolgt.

Der maximale seitliche Versatz c hängt vom Wert d ab, wobei es sich für die Praxis als ausgesprochen günstig erwiesen hat, wenn vorgesehen ist, dass c ≤ 2,5 * d ist. Der Wert von c wird abhängig vom Material und der Partikelgröße gewählt und ist einstellbar. Im dargestellten Fall ist c = 0.9 *d.

Strömungsaufwärts bzw. strömungsabwärts oder vertikal nach unten oder oben kann ein Versatz um einen Wert a ≤ 2,2 * d erfolgen. Im vorliegenden Fall ist der Versatz strömungsabwärts mit einem Wert a = 1,2 *d erfolgt.

Der seitliche Versatz gemäß Fig. 4 und 5 ist in die Richtung erfolgt, in der die Drehrichtung 32 des Abstreifers 6 und die Strömungsrichtung des Gasstroms durch das Gehäuse 1 in dieselbe Richtung verlaufen.

Wenn ein Versatz quer zur oder in Strömungsrichtung erfolgt, ergibt sich ein Versatzvektor, der unter einem Winkel γ zur Längsmittellinie 13 geneigt ist, wie aus Fig. 5 ersichtlich ist. Der Versatzvektor wird materialabhängig gewählt.

Die Achse der Zufuhr- oder Plastifizierungseinheit 27 und die Mittellinie 12 der Lochplatte 4 fallen bei den dargestellten Ausführungsformen zusammen. Der gemeinsame Flächenschwerpunkt FS liegt auf dieser Achse bzw. der Mittellinie 12 der Lochplatte 4.

Die Mittellinie 13 des Gehäuses 1 fällt mit der Mittellinie der Gaszuleitung 2 und/oder des Übergangsgehäuses 100 und/oder der Gasableitung zusammen.

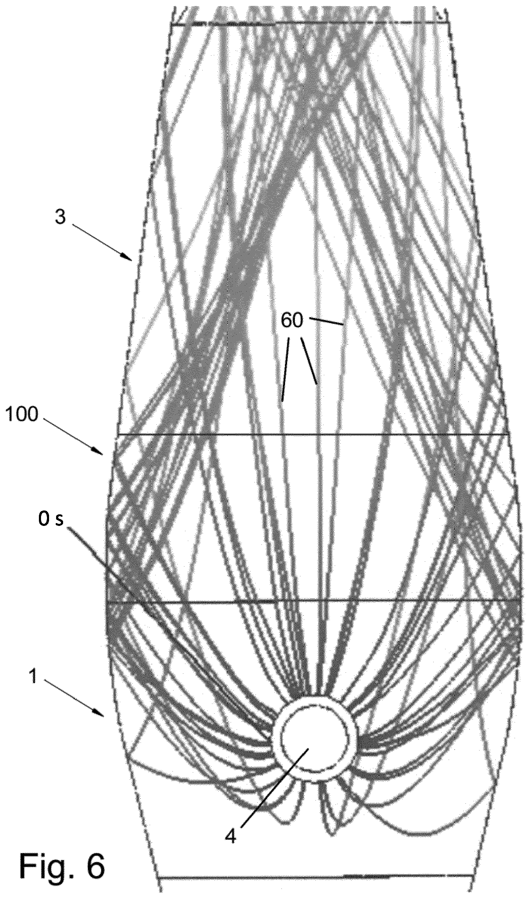

Fig. 6 zeigt Bahnen der durch die Lochscheibe 4 austretenden und vom Abstreifer 6 abgetrennten Granulatteilchen im Gehäuse 1 und in der Gasableitung 3. Man erkennt, dass die Teilchen entweder sofort strömungsabwärts befördert werden oder nach einer recht kurzen Bewegung, verursacht durch den Abstreifer 6, gegen die Strömungsrichtung des Gasstroms von diesem mitgenommen werden. Man erkennt ferner, dass die meisten Teilchenbahnen 60 ungebrochen, d.h. ohne Kollisionen mit der Gehäuseinnenwandung bzw. Innenwandung der Gasleitung verlaufen. Insbesondere in dem Bereich, der unmittelbar an den Austritt der Granulatteilchen aus der Lochplatte 4 anschließt, und der für die Trocknung der Teilchen wichtig ist, sind ausgesprochen wenig Teilchenkollisionen erkennbar. Die einzelnen abgetrennten Granulatteilchen verfolgen eigenständige Flugbahnen und Kollisionen mit anderen Granulatteilchen treten nahezu nicht auf.

Das Übergangsgehäuse 100 wird als eigenständiger Bauteil bzw. als Modul gefertigt und zwischen das Gehäuse 1 und die Gasableitung 3 eingebaut. Auch die weiteren Einheiten wie Gehäuse 1, Gaszuleitung 2 und Gasableitung 3 können modulartig gefertigt und zusammengebaut werden.

Wie insbesondere den Fig. 1, 2 und 3 zu entnehmen ist, ist vorgesehen, dass die Endfläche bzw. die Endumrandung 29 bzw. Endfläche des Übergangsgehäuses 100 und die Anfangsumrandung bzw. Anfangsfläche 39 der Gasableitung 3 gleiche Neigung zur Längs- bzw. Mittellinie bzw. zur Ebene E-E der Lochplatte 4 besitzen. Die Endumrandung bzw. Endfläche 29 des Übergangsgehäuses 100 sowie die Umfangsquerschnittsfläche F der Gasableitung 3 sind unter einem Winkel δ = 70° , zur Mittellinie bzw. Ebene der Lochplatte 4 geneigt, wobei sich der Winkel δ zur Zufuhr- oder Plastifizierungseinheit 40 bzw. zum Tragteil 23 hin öffnet. Damit ist bei eingeschwenkten Tragteilen 23, 24 sichergestellt, dass Kontinuität des Gasstroms und Dichtigkeit der Anlage gegeben sind.

In der in Fig. 2 dargestellten Ausführungsform beträgt die Länge L1 des Übergangsgehäuses 100 75 % der Länge L2 des Gehäuses 1. Die Länge des Übergangsgehäuses 100 wird auf der Mittellinie 13 gemessen, und zwar in der Ebene B-B, die senkrecht zur Ebene E-E der Lochplatte 4 verläuft.

## Patentansprüche

1. Anordnung zum Granulieren von plastifiziertem oder zumindest teilweise erweichtem oder zumindest teilweise aufgeschmolzenem Material, insbesondere Polymermaterial, umfassend ein Gehäuse (1), eine in dieses einmündende, einen rechteckigen Querschnitt aufweisende Gaszuleitung (2), eine strömungsabwärts des Gehäuses (1) befindliche, einen rechteckigen Querschnitt aufweisende Gasableitung (3), eine zumindest zum Teil im Gehäuse (1) gelegene Granuliereinheit mit einer in das Gehäuse (1) einspeisenden und/oder einmündenden Lochplatte (4) einer Zufuhr- oder Plastifizierungseinheit (27), vorzugsweise einem Extruder (27), und einen das durch die Ausnehmungen (5) der Lochplatte (4) austretende Material zerkleinernden bzw. abtrennenden Abstreifer (6), wobei in einer parallel zur Ebene der Lochplatte (4) und/oder der Vorderwand (17) des Gehäuses (1) verlaufenden Ebene bzw. Schnittebene (E-E), die beiden senkrecht zu dieser Ebene stehenden seitlichen Wandflächen (7) der Gasableitung (3) miteinander einen Winkel α2 einschließen, und die beiden senkrecht zu dieser Ebene stehenden seitlichen Wandflächen (8) der Gaszuleitung (2) einen Winkel α1 einschließen, wobei sich die beiden Winkel α1, α2 zum Gehäuse (1) hin öffnen und wobei der Winkel α1 größer ist als der Winkel α2,
**dadurch gekennzeichnet, dass** zwischen dem Gehäuse (1) und der Gasableitung (3) ein Übergangsgehäuse (100) angeordnet bzw. eingebaut ist.

2. Anordnung nach Anspruch 1, **dadurch gekennzeichnet, dass** in der Schnittebene (E-E) bzw. in der Ebene parallel zur Ebene der Lochplatte (4) der gegenseitige Abstand der senkrecht zu dieser Ebene stehenden Seitenwände (9) des Gehäuses (1) in ihrem strömungsabwärts gelegenen Endbereich, sowie der gegenseitige Abstand der daran anschließenden seitlichen, ebenfalls senkrecht zu dieser Ebene (E-E) stehenden Wandflächen (70) des Übergangsgehäuses (100) einen Wert b, insbesondere denselben Wert b, von 10 * d ≥ b ≥ 4 * d, vorzugsweise 8* d ≥ b ≥ 5 * d, besitzen, wobei der Wert von d berechnet wird, indem der gemeinsame Flächenschwerpunkt (FS) für alle vorhandenen Ausnehmungen (5) der Lochplatte (4) ermittelt wird, für jede Ausnehmung (5) der Abstand des Flächenschwerpunkts (S) der jeweiligen Ausnehmung (5) von dem gemeinsamen Flächenschwerpunkt (FS) ermittelt wird, die für die vorhandenen Ausnehmungen (5) ermittelten Abstandswerte (A) arithmetisch gemittelt werden und der doppelte Wert des arithmetischen Mittels als Wert d festgelegt wird.

3. Anordnung nach Anspruch 2, **dadurch gekennzeichnet, dass** der Wert b dem größten gegenseitigen Abstand der Seitenwände (9) des Gehäuses (1) sowie der seitlichen, an diese Seitenwände anschließenden Wandflächen (70) des Übergangsgehäuses (100) an seinem strömungsaufwärts gelegenen Endbereich entspricht.

4. Anordnung nach einem der Ansprüche 1 bis 3, **dadurch gekennzeichnet, dass** die beiden Seitenwandflächen (10) der Gasableitung (3), die senkrecht zu einer zur Ebene E-E bzw. senkrecht zu einer zur Ebene der Lochplatte (4) senkrechten Ebene B-B stehen, miteinander einen Winkel β2 einschließen, und die ebenfalls senkrecht zu einer zur Ebene E-E bzw. senkrecht zu einer zur Lochplatte (4) senkrechten Ebene B-B verlaufenden Seitenwandflächen (11) der Gaszuleitung (2) miteinander einen Winkel β1 einschließen, wobei sich die beiden Winkel β1, β2 vom Gehäuse (1) weg gerichtet öffnen und wobei der Winkel β1 größer ist als der Winkel β2.

5. Anordnung nach einem der Ansprüche 1 bis 4, **dadurch gekennzeichnet, dass** die zentrale Achse der Zufuhr- bzw. Plastifizierungseinheit (27), vorzugsweise eines Extruders, und/oder der gemeinsame Flächenschwerpunkt (FS) aller vorhandenen Ausnehmungen (5) bzw. die durch den Flächenschwerpunkt (FS) verlaufende Mittellinie (12) der Lochplatte (4) mittig bezüglich der Seitenwände (9) des Gehäuses (1) liegen und/oder in einer senkrecht zur Ebene der Lochplatte (4) stehenden und die Mittellinie (13) des Gehäuses (1) enthaltenden Symmetrieebene der Gaszuleitung (2) und/oder der Gasableitung (3) und/oder des Gehäuses (1) und/oder des Übergangsgehäuses (100) liegen.

6. Anordnung nach einem der Ansprüche 2 bis 4, **dadurch gekennzeichnet, dass** die zentrale Achse der Zufuhr- bzw. Plastifizierungseinheit (27), vorzugsweise des Extruders, und/oder der gemeinsame Flächenschwerpunkt (FS) aller vorhandenen Ausnehmungen (5) bzw. die durch diesen verlaufende Mittellinie (12) der Lochplatte (4) bezüglich einer Mittellinie (13) des Gehäuses (1) und/oder einer senkrecht zur Ebene der Lochplatte (4) stehenden und die Mittellinie (13) enthaltenden Symmetrieebene der Gaszuleitung (2) und/oder der Gasableitung (3) und/oder des Übergangsgehäuses (100) und/oder bezüglich der Mitte zwischen den Seitenflächen (9) des Gehäuses (1) seitlich versetzt ist, wobei die seitliche Versetzung um einen Wert c, mit c ≤ 2,5 * d, in den Bereich des Gehäuses (1) erfolgt ist, in dem die Drehrichtung 32 des Abstreifers (6) und die Richtung (14) der Gasströmung in die gleiche Richtung verlaufen.

7. Anordnung nach einem der Ansprüche 2 bis 6, **dadurch gekennzeichnet, dass** die zentrale Achse der Zufuhr- bzw. Plastifizierungseinheit (27), vorzugsweise eines Extruders, und/oder der gemeinsame Flächenschwerpunkt (FS) aller vorhandenen Ausnehmungen (5) bzw. eine durch diesen verlaufende Mittellinie (12) der Lochplatte (4), gegenüber der Stelle bzw. Querschnittsfläche des Gehäuses (1), an der - in Strömungsrichtung gesehen - die Seitenwände (9) des sich verbreiternden Gehäuses (1) den gegenseitigen Abstand b angenommen haben, strömungsaufwärts in einem Abstand a angeordnet ist, wobei a ≤ 1,1 * d ist.

8. Anordnung nach einem der Ansprüche 2 bis 7, **dadurch gekennzeichnet, dass** in einem Übergangsbereich (15) vom Gehäuse (1) zum Übergangsgehäuse (100) das Gehäuse (1) und das Übergangsgehäuse (100) die gleiche rechteckförmige Querschnittsfläche (16) besitzen, wobei die Länge der längeren Rechteckseite den Wert b besitzt.

9. Anordnung nach einem der Ansprüche 1 bis 8, **dadurch gekennzeichnet,**
- **dass** die Querschnittsfläche des Gehäuses (1) im Übergangsbereich (15) zum Übergangsgehäuse (100) bzw. die Querschnittsfläche (16) um 5 bis 20 %, vorzugsweise 10 bis 15 %, größer ist als die Querschnittsfläche der Gasableitung (3) in ihrem gehäusefernen Endbereich, und/oder
- **dass** die Querschnittsfläche des Gehäuses (1) auf der Höhe der Lochplatte (4) um 25 bis 35 % größer ist als die Querschnittsfläche der Gaszuleitung (2) in ihrem strömungsaufwärtigen Ende bzw. ihrem Anschluss an das Gebläse (30) , und/oder
- **dass** die Querschnittsfläche des Gehäuses (1) von der Höhe der Lochplatte (4) bis zum Übergangsbereich (15) zum Übergangsgehäuse (100) bzw. bis zur Querschnittsfläche (16) zur Ausbildung eines Diffusors um 10 bis 20 % zunimmt.

10. Anordnung nach einem der Ansprüche 1 bis 9, **dadurch gekennzeichnet, dass** in der Ebene (E-E) parallel zur Lochplatte (4) die gegenüberliegenden Seitenwandflächen (9) des Gehäuses (1) zumindest über einen Teilbereich ihrer Längserstreckung einen von der Gaszuleitung (2) zum Übergangsgehäuse (100) hin divergierenden, vom Inneren des Gehäuses (1) aus gesehen konvex gekrümmten, insbesondere kontinuierlichen, Verlauf besitzen.

11. Anordnung nach einem der Ansprüche 1 bis 8, **dadurch gekennzeichnet, dass** die Vorderwand (17) und die Rückwand (18) des Gehäuses (1) und/oder die Vorderwand (101) und die Rückwand (102) des Übergangsgehäuses (100) parallel zueinander und/oder parallel zur Ebene der Lochplatte (4) ausgerichtet sind.

12. Anordnung nach einem der Ansprüche 1 bis 11, **dadurch gekennzeichnet, dass** der Abstreifer (6) eine Antriebswelle besitzt, die im Gehäuse (1) von der Rückwand (18) des Gehäuses (1) zu der im Bereich der Vorderwand (17) des Gehäuses (1) gelegenen und den Endbereich der Zufuhr- bzw. Plastifizierungseinheit (27) darstellenden Lochplatte (4) verläuft.

13. Anordnung nach einem der Ansprüche 4 bis 12, **dadurch gekennzeichnet, dass** an die Gasableitung (3) ein Übergangsteil (20) angeschlossen ist, der den rechteckförmigen Querschnitt der Gasableitung (3) in einen Querschnitt mit rundem oder gekrümmtem Umfang überleitet, wobei der Übergangsteil (20) sich strömungsabwärts verjüngende Wandabschnitte (21, 22) aufweist, die insbesondere unter dem gleichen Winkel α2 bzw. dem gleichen Winkel β2 geneigt an die seitlichen Wandflächen (7) bzw. Seitenwandflächen (10) der Gasableitung (3) anschließen bzw. diese, insbesondere in Form von Dreiecken, verlängern.

14. Anordnung nach einem der Ansprüche 4 bis 13, **dadurch gekennzeichnet, dass** der Scheitel (S) der Winkel α1, α2 und/oder β1, β2 auf der Mittellinie (13) bzw. einer, insbesondere parallel zu einer Mittellinie (12) der Lochplatte (4) bzw. zentralen Achse der Zufuhr- oder Plastifizierungseinheit (27) verlaufenden oder diese enthaltenden, Längssymmetrieebene durch die Gaszuleitung (2) und/oder das Gehäuse (1) und/oder das Übergangsgehäuse (100) und/oder die Gasableitung (3) liegt.

15. Anordnung nach einem der Ansprüche 1 bis 14, **dadurch gekennzeichnet, dass** der Winkel α2 das 0,3-fache bis 0,9-fache, vorzugsweise das 0,5-fache bis 0,8-fache, des Winkels α1 beträgt.

16. Anordnung nach einem der Ansprüche 1 bis 15, **dadurch gekennzeichnet,**
- **dass** der Winkel α1 < 90° ist und vorzugsweise im Bereich von 10° bis 80° liegt und insbesondere ein spitzer Winkel von 15° bis 45° ist, und/oder
- **dass** der Winkel α2 < 90° ist und insbesondere ein spitzer Winkel, vorzugsweise im Bereich von 3° bis 35°, insbesondere von 6° bis 30°, ist.

17. Anordnung nach einem der Ansprüche 4 bis 16, **dadurch gekennzeichnet, dass** der Winkel β2 das 0,1-fache bis 0,45-fache, vorzugsweise das 0,15-fache bis 0,35-fache, des Winkels β1 beträgt.

18. Anordnung nach einem der Ansprüche 4 bis 17, **dadurch gekennzeichnet,**
- **dass** der Winkel β1 < 90° ist und insbesondere ein spitzer Winkel, vorzugsweise im Bereich von 10° bis 60°, insbesondere von 15° bis 50°, ist, und/oder
- **dass** der Winkel β2 < 90° ist und insbesondere ein spitzer Winkel, vorzugsweise im Bereich von 2° bis 30°, insbesondere von 4° bis 15°, ist.

19. Anordnung nach einem der Ansprüche 1 bis 18, **dadurch gekennzeichnet, dass** die Gaszuleitung (2), das Gehäuse (1), das Übergangsgehäuse (100) und die Gasableitung (3) vertikal übereinander angeordnet bzw. aufgebaut sind.

20. Anordnung nach einem der Ansprüche 1 bis 19, **dadurch gekennzeichnet, dass** die Mittellinie (12) der Lochplatte (4) und die zentrale Achse der Zufuhr- oder Plastifizierungseinheit (27) zusammenfallen.

21. Anordnung nach einem der Ansprüche 1 bis 20, **dadurch gekennzeichnet, dass** die Länge (L1) des Übergangsgehäuses (100) in Strömungsrichtung 35 bis 100 %, vorzugsweise 50 bis 90 %, der Länge (L2) des Gehäuses (1) beträgt.

22. Anordnung nach einem der Ansprüche 1 bis 21, **dadurch gekennzeichnet, dass** die Querschnittsfläche des Übergangsgehäuses (100) von seinem gehäuseseitigen Endbereich zu seinem strömungsabwärts gelegenen Endbereich hin um 20 bis 45 % abnimmt.

23. Anordnung nach einem der Ansprüche 1 bis 22, **dadurch gekennzeichnet,**
- **dass** die Seitenwandflächen (70) des Übergangsgehäuses (100) strömungsabwärts aufeinander zu geneigt und/oder gekrümmt konvergierend zur Gasableitung (3) hin verlaufen und/oder
- **dass** die Seitenwandflächen (70) des Übergangsgehäuses (100) senkrecht zu einer zur Ebene der Lochplatte (4) parallelen Ebene E-E stehen.

24. Anordnung nach einem der Ansprüche 1 bis 23, **dadurch gekennzeichnet, dass** die Endfläche bzw. Endumrandung (29) des Übergangsgehäuses (100) und die Anfangsfläche bzw. Anfangsumrandung (39) der Gasableitung (3) gleiche Neigung zur Längs- bzw. Mittellinie (13) bzw. zur Ebene der Lochplatte (4) besitzen und die Endfläche bzw. Endumrandung (29) des Übergangsgehäuses (100) und die Anfangsfläche bzw. Anfangsumrandung (39) unter einem, insbesondere demselben, Winkel δ = 40 bis 90°, vorzugsweise 50 bis 80°, zur Mittellinie (13) bzw. Ebene der Lochplatte (4) geneigt verlaufen, wobei sich der Winkel 5 zur Zufuhr- oder Plastifizierungseinheit (27) hin öffnet.

25. Anordnung nach einem der Ansprüche 1 bis 24, **dadurch gekennzeichnet, dass** das Übergangsgehäuse (100) an der der Gaszuleitung (2) gegenüberliegenden Wand des Gehäuses (1) angeschlossen bzw. angebaut ist.

26. Anordnung nach einem der Ansprüche 1 bis 25, **dadurch gekennzeichnet,**
- **dass** die Gaszuleitung (2), das Gehäuse (1) und das Übergangsgehäuse (100) zu einer Einheit zusammengebaut sind, und
- **dass** die Zufuhr- oder Plastifizierungseinheit (27) und die Gasableitung (3) zu einer weiteren Einheit zusammengebaut sind, wobei zumindest eine der beiden Einheiten, insbesondere auf der jeweils anderen Einheit, relativ zur anderen Einheit verschwenkbar ist.

27. Anordnung nach einem der Ansprüche 1 bis 26, **dadurch gekennzeichnet, dass** das Übergangsgehäuse (100) als eigenständiger Bauteil bzw. als Modul gefertigt ist und zwischen dem Gehäuse (1) und der Gasableitung (3) zusätzlich als weiterer Bauteil angeordnet bzw. eingebaut ist.

## Claims

1. Arrangement for granulating plasticised or at least partially softened or at least partially melted material, in particular polymer material, comprising a housing (1), a gas supply line (2) opening into the latter and having a rectangular cross-section, a gas discharge line (3) located downstream of the housing (1) and having a rectangular cross-section, a granulating unit located at least partially in the housing (1) and having a perforated plate (4) of a feeding or plasticizing unit (27), preferably an extruder (27), which feeds into and/or opens into the housing (1), and a scraper (6) which comminutes or separates the material emerging through the recesses (5) of the perforated plate (4), wherein,
in a plane or sectional plane (E-E) running parallel to the plane of the perforated plate (4) and/or the front wall (17) of the housing (1), the two lateral wall surfaces (7) of the gas discharge line (3), which are perpendicular to this plane, enclose an angle α2 with one another, and the two lateral wall surfaces (8) of the gas supply line (2), which are perpendicular to this plane, enclose an angle α1, wherein the two angles α1, α2 open towards the housing (1) and wherein the angle α1 is larger than the angle α2,
**characterised in that**
a transition housing (100) is arranged or installed between the housing (1) and the gas discharge line (3).

2. Arrangement according to claim 1, **characterised in that** in the sectional plane (E-E) or in the plane parallel to the plane of the perforated plate (4), the mutual distance of the side walls (9) of the housing (1), which are perpendicular to this plane, in their downstream end region, as well as the mutual distance of the lateral wall surfaces (70) of the transition housing (100), which are adjacent thereto and are likewise perpendicular to this plane (E-E), have a value b, in particular the same value b, of 10 * d ≥ b ≥ 4 * d, preferably 8* d ≥ b ≥ 5 * d, wherein the value of d is calculated by determining the common area centre of gravity (FS) for all existing recesses (5) of the perforated plate (4), by determining for each recess (5) the distance of the area centre of gravity (5) of the respective recess (5) from the common area centre of gravity (FS), by arithmetically averaging the distance values (A) determined for the existing recesses (5) and by fixing twice the value of the arithmetic mean as the value d.

3. Arrangement according to claim 2, **characterised in that** the value b corresponds to the greatest mutual distance between the side walls (9) of the housing (1) and the lateral wall surfaces (70), adjoining these sidewalls, of the transition housing (100) at its upstream end region.

4. Arrangement according to any one of claims 1 to 3, **characterised in that** the two side wall surfaces (10) of the gas discharge line (3), which are perpendicular to a plane E-E or perpendicular to a plane B-B perpendicular to the plane of the perforated plate(4), enclose an angle β2 with one another, and the side wall surfaces (11) of the gas supply line (2), which likewise extend perpendicularly to a plane E-E or perpendicularly to a plane B-B perpendicular to the perforated plate (4), enclose an angle β1 with one another, wherein the two angles β1, β2 open away from the housing (1) and wherein the angle β1 is larger than the angle β2.

5. Arrangement according to any one of claims 1 to 4, **characterised in that** the central axis of the feeding or plasticising unit (27), preferably of an extruder, and/or the common area centre of gravity (FS) of all the recesses (5) present or the centre line (12) of the perforated plate (4) running through the area centre of gravity (FS) lie centrally with respect to the side walls (9) of the housing (1) and/or lie in a plane of symmetry, perpendicular to the plane of the perforated plate (4) and containing the centre line (13) of the housing (1), of the gas supply line (2) and/or of the gas discharge line (3) and/or of the housing (1) and/or of the transition housing (100).

6. Arrangement according to any one of claims 2 to 4, **characterised in that** the central axis of the feeding or plasticising unit (27), preferably of the extruder, and/or the common area centre of gravity (FS) of all the recesses (5) present and/or the centre line (12) of the perforated plate (4) running through the latter is offset laterally with respect to a centre line (13) of the housing (1) and/or with respect to a plane of symmetry of the gas supply line (2) and/or of the gas discharge line (3) and/or of the transition housing (100) which is perpendicular to the plane of the perforated plate (4) and contains the centre line (13) and/or with respect to the centre between the side surfaces (9) of the housing (1), wherein the lateral offset is by a value c, with c ≤ 2.5 * d, in the region of the housing (1) in which the direction of rotation 32 of the scraper (6) and the direction (14) of the gas flow run in the same direction.

7. Arrangement according to any one of claims 2 to 6, **characterised in that** the central axis of the feeding or plasticising unit (27), preferably of an extruder, and/or the common area centre of gravity (FS) of all the recesses (5) present, or a centre line (12) of the perforated plate (4) running through the latter, is arranged opposite the point or cross sectional area of the housing (1), at which - viewed in the direction of flow - the side walls (9) of the widening housing (1) have assumed the mutual distance b, upstream at a distance a, wherein a is ≤ 1.1 * d.

8. Arrangement according to any one of claims 2 to 7, **characterised in that** in a transition region (15) from the housing (1) to the transition housing (100) the housing (1) and the transition housing (100) have the same rectangular cross-sectional area (16), wherein the length of the longer rectangular side has the value b.

9. Arrangement according to any one of claims 1 to 8, **characterised in**
- **that** the cross-sectional area of the housing (1) in the transition region (15) to the transition housing (100) or the cross-sectional area (16) is larger by 5 to 20%, preferably 10 to 15%, than the cross-sectional area of the gas discharge line (3) in its end region remote from the housing, and/or
- **that** the cross-sectional area of the housing (1) at the level of the perforated plate (4) is 25 to 35% larger than the cross-sectional area of the gas supply line (2) in its upstream end or its connection to the blower (30), and/or
- **that** the cross-sectional area of the housing (1) increases by 10 to 20% from the level of the perforated plate (4) to the transition region (15) to the transition housing (100) or to the cross-sectional area (16) for forming a diffuser.

10. Arrangement according to any one of claims 1 to 9, **characterised in that**, in the plane (E-E) parallel to the perforated plate (4), the opposite side wall surfaces (9) of the housing (1) have, at least over a partial region of their longitudinal extent, a convexly curved, in particular continuous, course diverging from the gas supply line (2) towards the transition housing (100) as seen from the interior of the housing (1).

11. Arrangement according to any one of claims 1 to 8, **characterised in that** the front wall (17) and the rear wall (18) of the housing (1) and/or the front wall (101) and the rear wall (102) of the transition housing (100) are aligned parallel to one another and/or parallel to the plane of the perforated plate (4).

12. Arrangement according to any one of claims 1 to 11, **characterised in that** the scraper (6) has a drive shaft which runs in the housing (1) from the rear wall (18) of the housing (1) to the perforated plate (4) located in the region of the front wall (17) of the housing (1) and constituting the end region of the feeding or plasticising unit (27).

13. Arrangement according to any one of claims 4 to 12, **characterised in that** a transition part (20) is connected to the gas discharge line (3), which transition part (20) transitions the rectangular cross-section of the gas discharge line (3) into a cross-section with a round or curved circumference, wherein the transition part (20) has wall sections (21, 22) tapering downstream, which are joint, in particular angled at the same angle α2 or the same angle β2, to the lateral wall surfaces (7) or side wall surfaces (10) of the gas discharge line (3) or extend them, in particular in the form of triangles.

14. Arrangement according to any one of claims 4 to 13, **characterised in that** the vertex (5) of the angles α1, α2 and/or β1, β2 lies on the centre line (13) or on a longitudinal plane of symmetry through the gas supply line (2) and/or the housing (1) and/or the transition housing (100) and/or the gas discharge line (3), in particular running parallel to a centre line (12) of the perforated plate (4) or central axis of the feeding or plasticising unit (27), or containing the same.

15. Arrangement according to any one of claims 1 to 14, **characterised in that** the angle α2 is 0.3 times to 0.9 times, preferably 0.5 times to 0.8 times, the angle α1.

16. Arrangement according to any one of claims 1 to 15, **characterised in**
- **that** the angle α1 is < 90° and preferably lies in the range from 10° to 80° and is in particular an acute angle of 15° to 45°, and/or
- **that** the angle α2 is < 90° and is in particular an acute angle, preferably in the range from 3° to 35°, in particular from 6° to 30°.

17. Arrangement according to any one of claims 4 to 16, **characterised in that** the angle β2 is 0.1 times to 0.45 times, preferably 0.15 times to 0.35 times, the angle β1.

18. Arrangement according to any one of claims 4 to 17, **characterised in**
- **that** the angle β1 is < 90° and is in particular an acute angle, preferably in the range from 10° to 60°, in particular from 15° to 50°, and/or
- **that** the angle β2 is < 90° and is in particular an acute angle, preferably in the range from 2° to 30°, in particular from 4° to 15°.

19. Arrangement according to any one of claims 1 to 18, **characterised in that** the gas supply line (2), the housing (1), the transition housing (100) and the gas discharge line (3) are arranged or constructed vertically one above the other.

20. Arrangement according to any one of claims 1 to 19, **characterised in that** the centre line (12) of the perforated plate (4) and the central axis of the supply or plasticising unit (27) coincide.

21. Arrangement according to any one of claims 1 to 20, **characterised in that** the length (L1) of the transition housing (100) in the flow direction is 35 to 100%, preferably 50 to 90%, of the length (L2) of the housing (1).

22. Arrangement according to any one of claims 1 to 21, **characterised in that** the cross sectional area of the transition housing (100) decreases by 20 to 45% from its housing-side end region towards its downstream end region.

23. Arrangement according to any one of claims 1 to 22, **characterised in**
- **that** the side wall surfaces (70) of the transition housing (100) run downstream towards one another in an inclined and/or curved manner converging towards the gas discharge line (3) and/or
- **that** the side wall surfaces (70) of the transition housing (100) are perpendicular to a plane E-E parallel to the plane of the perforated plate (4).

24. Arrangement according to any one of claims 1 to 23, **characterised in that** the end surface or end border (29) of the transition housing (100) and the initial surface or initial border (39) of the gas discharge line (3) have the same inclination to the longitudinal or centre line (13) or to the plane of the perforated plate (4), and the end surface or end border (29) of the transition housing (100) and the initial surface or initial border (39) run at an angle δ, in particular the same angle = 40 to 90°, preferably 50 to 80°, to the centre line (13) or plane of the perforated plate (4), wherein the angle δ opens towards the feeding or plasticising unit (27).

25. Arrangement according to any one of claims 1 to 24, **characterised in that** the transition housing (100) is connected or attached to the wall of the housing (1) opposite the gas supply line (2).

26. Arrangement according to any one of claims 1 to 25, **characterised in**
- **that** the gas supply line (2), the housing (1) and the transition housing (100) are assembled into one unit, and
- **that** the feeding or plasticising unit (27) and the gas discharge line (3) are assembled to form a further unit, wherein at least one of the two units is pivotable relative to the other unit, in particular on the other unit.

27. Arrangement according to any one of claims 1 to 26, **characterised in that** the transition housing (100) is manufactured as an independent component or as a module and is additionally arranged or installed as a further component between the housing (1) and the gas discharge line (3).

## Revendications

1. Agencement pour la granulation d'un matériau plastifié ou au moins partiellement ramolli ou au moins partiellement fondu, en particulier un matériau polymère, comprenant un boîtier (1), une conduite d'alimentation en gaz (2) débouchant dans celui-ci et présentant une coupe transversale rectangulaire, une conduite d'évacuation de gaz (3) présentant une coupe transversale rectangulaire située en aval du boîtier (1), une unité de granulation située au moins partiellement dans le boîtier (1) avec une plaque perforée (4) alimentant et/ou débouchant dans le boîtier (1) d'une unité d'alimentation ou de plastification (27), de préférence une extrudeuse (27), et un racloir (6) de broyage ou de séparation du matériau sortant par les évidements (5) de la plaque perforée (4), dans lequel
dans un plan ou plan de coupe (E-E) parallèle au plan de la plaque perforée (4) et/ou à la paroi avant (17) du boîtier (1), les deux surfaces de paroi latérales (7) de la conduite d'évacuation de gaz (3) perpendiculaires à ce plan forment ensemble un angle α2, et les deux surfaces de paroi latérales (8) de la conduite d'alimentation en gaz (2) perpendiculaires à ce plan forment un angle α1, dans lequel les deux angles α1, α2 débouchent vers le boîtier (1) et l'angle α1 est plus grand que l'angle α2,
**caractérisé en ce que**
un boîtier de transition (100) est disposé ou monté entre le boîtier (1) et la conduite d'évacuation de gaz (3).

2. Agencement selon la revendication 1, **caractérisé en ce que**, dans le plan de coupe (E-E) ou dans le plan parallèle au plan de la plaque perforée (4), la distance mutuelle entre les parois latérales (9) du boîtier (1) perpendiculaires à ce plan, dans leur zone d'extrémité située en aval, ainsi que la distance mutuelle entre les surfaces de paroi latérales (70) du boîtier de transition (100) qui s'y raccordent et qui sont également perpendiculaires à ce plan (E-E), possèdent une valeur b, en particulier la même valeur b, de 10 * d ≥ b ≥ 4 * d, de préférence 8* d ≥ b ≥ 5 * d, dans lequel la valeur de d est calculée en déterminant le centre de gravité de surface (FS) commun pour tous les évidements (5) existants de la plaque perforée (4), en déterminant pour chaque évidement (5) la distance du centre de gravité de surface (S) de l'évidement (5) respectif à partir du centre de gravité de surface (FS) commun, en faisant la moyenne arithmétique des valeurs de distance (A) déterminées pour les évidements (5) existants et en fixant le double de la valeur de la moyenne arithmétique comme valeur d.

3. Agencement selon la revendication 2, **caractérisé en ce que** la valeur b correspond à la plus grande distance mutuelle entre les parois latérales (9) du boîtier (1) et les surfaces de paroi latérales (70) du boîtier de transition (100) adjacentes à ces parois latérales à sa zone d'extrémité en amont.

4. Agencement selon l'une quelconque des revendications 1 à 3, **caractérisé en ce que** les deux surfaces de paroi latérale (10) de la conduite d'évacuation de gaz (3), qui sont perpendiculaires à un plan B-B perpendiculaire au plan E-E ou perpendiculaires à un plan B-B perpendiculaire au plan de la plaque perforée (4), forment ensemble un angle β2, et les surfaces de paroi latérale (11) de la conduite d'alimentation en gaz (2), qui s'étendent également perpendiculairement à un plan B-B perpendiculaire au plan E-E ou perpendiculairement à un plan B-B perpendiculaire à la plaque perforée (4), forment ensemble un angle β1, dans lequel les deux angles β1, β2 s'ouvrent en s'éloignant du boîtier (1) et l'angle β1 est plus grand que l'angle β2.

5. Agencement selon l'une quelconque des revendications 1 à 4, **caractérisé en ce que** l'axe central de l'unité d'alimentation ou de plastification (27), de préférence une extrudeuse, et/ou le centre de gravité de surface (FS) commun de tous les évidements (5) existants ou la ligne médiane (12) de la plaque perforée (4) passant par le centre de gravité de surface (FS) sont situés au centre par rapport aux parois latérales (9) du boîtier (1) et/ou dans un plan de symétrie de la conduite d'alimentation en gaz (2) et/ou de la conduite d'évacuation de gaz (3) et/ou du boîtier (1) et/ou du boîtier de transition (100) perpendiculaire au plan de la plaque perforée (4) et contenant la ligne médiane (13) du boîtier (1).

6. Agencement selon l'une quelconque des revendications 2 à 4, **caractérisé en ce que** l'axe central de l'unité d'alimentation ou de plastification (27), de préférence de l'extrudeuse, et/ou le centre de gravité de surface (FS) commun de tous les évidements (5) existants ou la ligne médiane (12) de la plaque perforée (4) passant par celui-ci est décalée latéralement par rapport à une ligne médiane (13) du boîtier (1) et/ou un plan de symétrie de la conduite d'alimentation en gaz (2) et/ou de la conduite d'évacuation de gaz (3) et/ou du boîtier de transition (100) perpendiculaire au plan de la plaque perforée (4) et contenant la ligne médiane (13) et/ou par rapport au milieu entre les surfaces latérales (9) du boîtier (1), dans lequel le décalage latéral est d'une valeur c, avec c ≤ 2,5 * d, dans la zone du boîtier (1) dans laquelle le sens de rotation 32 du racloir (6) et le sens (14) de l'écoulement de gaz vont dans le même sens.

7. Agencement selon l'une quelconque des revendications 2 à 6, **caractérisé en ce que** l'axe central de l'unité d'alimentation ou de plastification (27), de préférence d'une extrudeuse, et/ou le centre de gravité de surface (FS) commun de tous les évidements (5) existants ou une ligne médiane (12) de la plaque perforée (4) passant par celui-ci, est disposée en amont à une distance a par rapport à l'endroit ou à la surface de section transversale du boîtier (1) où, vu dans le sens d'écoulement, les parois latérales (9) du boîtier (1) s'élargissant ont adopté la distance mutuelle b, dans lequel a ≤ 1,1 * d.

8. Agencement selon l'une quelconque des revendications 2 à 7, **caractérisé en ce que**, dans une zone de transition (15) du boîtier (1) au boîtier de transition (100), le boîtier (1) et le boîtier de transition (100) possèdent la même surface de section transversale rectangulaire (16), dans lequel la longueur du côté le plus long du rectangle possède la valeur b.

9. Agencement selon l'une quelconque des revendications 1 à 8, **caractérisé en ce que**
- la surface de section transversale du boîtier (1) dans la zone de transition (15) vers le boîtier de transition (100) ou la surface de section transversale (16) est plus grande de 5 à 20 %, de préférence de 10 à 15 %, que la surface de section transversale de la conduite d'évacuation de gaz (3) dans sa zone d'extrémité éloignée du boîtier, et/ou
- la surface de section transversale du boîtier (1) à la hauteur de la plaque perforée (4) est plus grande de 25 à 35 % que la surface de section transversale de la conduite d'alimentation en gaz (2) à son extrémité en amont ou au niveau de son raccord au ventilateur (30), et/ou
- la surface de section transversale du boîtier (1) augmente de 10 à 20 % de la hauteur de la plaque perforée (4) à la zone de transition (15) vers le boîtier de transition (100) ou à la surface de section transversale (16) pour former un diffuseur.

10. Agencement selon l'une quelconque des revendications 1 à 9, **caractérisé en ce que**, dans le plan (E-E) parallèle à la plaque perforée (4), les surfaces de paroi latérale (9) opposées du boîtier (1) possèdent, au moins sur une zone partielle de leur extension longitudinale, un tracé divergeant de la conduite d'alimentation en gaz (2) vers le boîtier de transition (100), incurvé de manière convexe, en particulier de manière continue, vu de l'intérieur du boîtier (1).

11. Agencement selon l'une quelconque des revendications 1 à 8, **caractérisé en ce que** la paroi avant (17) et la paroi arrière (18) du boîtier (1) et/ou la paroi avant (101) et la paroi arrière (102) du boîtier de transition (100) sont orientées parallèlement l'une à l'autre et/ou parallèlement au plan de la plaque perforée (4).

12. Agencement selon l'une quelconque des revendications 1 à 11, **caractérisé en ce que** le racloir (6) possède un arbre d'entraînement qui s'étend dans le boîtier (1) de la paroi arrière (18) du boîtier (1) à la plaque perforée (4) située au niveau de la paroi avant (17) du boîtier (1) et constituant la zone d'extrémité de l'unité d'alimentation ou de plastification (27).

13. Agencement selon l'une quelconque des revendications 4 à 12, **caractérisé en ce qu'**une partie de transition (20) est raccordée à la conduite d'évacuation de gaz (3), partie qui passe de la section transversale rectangulaire de la conduite d'évacuation de gaz (3) à une section transversale à périphérie ronde ou incurvée, dans lequel la partie de transition (20) présente des sections de paroi (21, 22) se rétrécissant vers l'aval, qui se raccordent en particulier selon le même angle α2 ou le même angle β2 incliné aux surfaces de paroi latérales (7) ou aux surfaces de paroi latérales (10) de la conduite d'évacuation de gaz (3) ou prolongent celles-ci, en particulier sous la forme de triangles.

14. Agencement selon l'une quelconque des revendications 4 à 13, **caractérisé en ce que** le sommet (S) des angles α1, α2 et/ou β1, β2 est situé sur la ligne médiane (13) ou sur un plan de symétrie longitudinal passant par la conduite d'alimentation en gaz (2) et/ou le boîtier (1) et/ou le boîtier de transition (100) et/ou la conduite d'évacuation de gaz (3), en particulier parallèle à une ligne médiane (12) de la plaque perforée (4) ou à l'axe central de l'unité d'alimentation ou de plastification (27), ou contenant celle-ci.

15. Agencement selon l'une quelconque des revendications 1 à 14, **caractérisé en ce que** l'angle α2 est de 0,3 à 0,9 fois, de préférence de 0,5 à 0,8 fois, à l'angle α1.

16. Agencement selon l'une quelconque des revendications 1 à 15, **caractérisé en ce que**
- l'angle α1 est < 90° et se situe de préférence entre 10° et 80° et en particulier est un angle aigu de 15° à 45°, et/ou
- l'angle α2 est ≤ 90° et est en particulier un angle aigu, de préférence dans la plage de 3° à 35°, en particulier de 6° à 30°.

17. Agencement selon l'une quelconque des revendications 4 à 16, **caractérisé en ce que** l'angle β2 est de 0,1 à 0,45 fois, de préférence de 0,15 à 0,35 fois, l'angle β1.

18. Agencement selon l'une quelconque des revendications 4 à 17, **caractérisé en ce que**
- l'angle β1 est < 90° et est en particulier un angle aigu, de préférence dans la plage de 10° à 60°, en particulier de 15° à 50°, et/ou
- l'angle β2 est < 90° et est en particulier un angle aigu, de préférence dans la plage de 2° à 30°, en particulier de 4° à 15°.

19. Agencement selon l'une quelconque des revendications 1 à 18, **caractérisé en ce que** la conduite d'alimentation en gaz (2), le boîtier (1), le boîtier de transition (100) et la conduite d'alimentation en gaz (3) sont disposés ou montés verticalement l'un sur l'autre.

20. Agencement selon l'une quelconque des revendications 1 à 19, **caractérisé en ce que** la ligne médiane (12) de la plaque perforée (4) et l'axe central de l'unité d'alimentation ou de plastification (27) coïncident.

21. Agencement selon l'une quelconque des revendications 1 à 20, **caractérisé en ce que** la longueur (L1) du boîtier de transition (100) dans le sens d'écoulement est entre 35 et 100 %, de préférence entre 50 et 90 %, de la longueur (L2) du boîtier (1).

22. Agencement selon l'une quelconque des revendications 1 à 21, **caractérisé en ce que** la surface de section transversale du boîtier de transition (100) diminue de 20 à 45 % de sa zone d'extrémité côté boîtier à sa zone d'extrémité en aval.

23. Agencement selon l'une quelconque des revendications 1 à 22, **caractérisé en ce que**
- les surfaces de paroi latérale (70) du boîtier de transition (100) s'étendent en aval l'une vers l'autre en étant inclinées et/ou incurvées en convergeant vers la conduite d'évacuation de gaz (3) et/ou
- les surfaces de paroi latérale (70) du boîtier de transition (100) sont perpendiculaires à un plan E-E parallèle au plan de la plaque perforée (4).

24. Agencement selon l'une quelconque des revendications 1 à 23, **caractérisé en ce que** la surface d'extrémité ou le bord d'extrémité (29) du boîtier de transition (100) et la surface initiale ou le bord initial (39) de la conduite d'évacuation de gaz (3) comportent la même inclinaison par rapport à la ligne longitudinale ou médiane (13) ou au plan de la plaque perforée (4) et la surface d'extrémité ou le bord d'extrémité (29) du boîtier de transition (100) et la surface initiale ou le bord initial (39) sont inclinés d'un angle, en particulier le même angle δ = 40 à 90°, de préférence 50 à 80°, par rapport à la ligne médiane (13) ou au plan de la plaque perforée (4), dans lequel l'angle δ s'ouvre vers l'unité d'alimentation ou de plastification (27).

25. Agencement selon l'une quelconque des revendications 1 à 24, **caractérisé en ce que** le boîtier de transition (100) est raccordé ou monté sur la paroi du boîtier (1) opposée à la conduite d'alimentation en gaz (2).

26. Agencement selon l'une quelconque des revendications 1 à 25, **caractérisé en ce que**
- la conduite d'alimentation en gaz (2), le boîtier (1) et le boîtier de transition (100) sont assemblés en une unité, et
- l'unité d'alimentation ou de plastification (27) et la conduite d'évacuation de gaz (3) sont assemblées en une autre unité, dans lequel au moins une des deux unités peut pivoter par rapport à l'autre unité, en particulier sur l'autre unité respective.

27. Agencement selon l'une quelconque des revendications 1 à 26, **caractérisé en ce que** le boîtier de transition (100) est fabriqué en tant que composant autonome ou en tant que module et est disposé ou monté en plus en tant que composant supplémentaire entre le boîtier (1) et la conduite d'évacuation de gaz (3).
